# EUROPEAN PATENT APPLICATION

(11) **EP 4 395 098 A1**
(43) Date of publication of application: **03.07.2024**
(21) Application number: 22891478.4
(22) Date of filing: 05.07.2022
(51) Int. Cl.: H02J 3/28, F25B 13/00, F25B 41/20, F25B 41/30

(54) **ENERGY STORAGE AND CHARGING STATION**

(30) Priority: 11.11.2021 CN 202111330842
(71) Applicant: Huawei Digital Power Technologies Co., Ltd., Shenzhen, Guangdong 518043 (CN)
(72) Inventor: HU, Minggui, Shenzhen, Guangdong 518043 (CN); LIAN, Zhisheng, Shenzhen, Guangdong 518043 (CN)
(74) Representative: Isarpatent
(86) International application number: PCT/CN2022/103798
(87) International publication number: WO 2023/082669

(57) **Abstract**

Embodiments of this application provide an energy storage and charging station. Heat of an energy storage system and heat of a charging system are managed in a centralized manner, so that the energy storage system and the charging system can exchange heat by using a heat exchange assembly. A cooling medium in a cooling medium loop separately flows through the charging system and the energy storage system, and the charging system and the energy storage system each exchange heat with the cooling medium loop. Heat generated when the charging system works is transferred, through the cooling medium loop, to the energy storage system for use, to reduce energy consumption required to heat the energy storage system to maintain a temperature, and improve energy use efficiency.

## Description

This application claims priority to Chinese Patent Application No. 202111330842.X, filed with the China National Intellectual Property Administration on November 11, 2021 and entitled "ENERGY STORAGE AND CHARGING STATION", which is incorporated herein by reference in its entirety.

### TECHNICAL FIELD

This application relates to the field of thermal management technologies, and in particular, to an energy storage and charging station.

### BACKGROUND

An energy storage and charging station may be configured to charge an external device such as a vehicle. The energy storage and charging station usually includes an energy storage system and a charging system. The energy storage and charging station is connected to a power grid. In a valley period in which power use is loose, the charging system may directly charge the external device by using the power grid. In a peak period in which power use is tight, the charging system may charge the external device by using the energy storage system.

In a related technology, an energy storage and charging station needs to perform thermal management on an energy storage system and a charging system by using a thermal management system. Thermal management of the energy storage and charging station may be divided into two parts. Part 1: When the charging system works, if too much heat is emitted, the charging system needs to be cooled to reduce a temperature. Part 2: A battery of the energy storage system needs to be maintained in a proper working range, and a temperature of the battery needs to be reduced at a high temperature, and the battery needs to be heated at a low temperature. However, heat generated when the charging system works is dissipated to a surrounding environment, and energy consumption required to heat the energy storage system to maintain a temperature is large. Consequently, overall energy consumption of the energy storage and charging station is large, and energy utilization is low.

### SUMMARY

Embodiments of this application provide an energy storage and charging station, to resolve a problem that working heat of a charging system cannot be used, energy consumption of maintaining a temperature of the energy storage system is high, and overall energy utilization of the energy storage and charging station is low.

An embodiment of this application provides an energy storage and charging station, including a heat exchange assembly, an energy storage system configured to store electric energy, and a charging system configured to charge an electric component. The energy storage system is electrically connected to the charging system; and the heat exchange assembly includes a cooling medium loop, a cooling medium in the cooling medium loop separately flows through the charging system and the energy storage system, and the charging system and the energy storage system each exchange heat with the cooling medium loop, to transfer, to the energy storage system through the cooling medium loop, heat generated when the charging system works.

The energy storage and charging station provided in this embodiment of this application may manage heat of the energy storage system and heat of the charging system in a centralized manner, so that when the energy storage system needs to be heated in a low-temperature environment, heat generated when the charging system works can be transferred to the energy storage system for use, to reduce energy consumption required to heat the energy storage system to maintain a temperature, and improve energy use efficiency.

In a possible implementation, the heat exchange assembly may include at least two cooling medium loops, the at least two cooling medium loops may include a first cooling medium loop and a second cooling medium loop, the first cooling medium loop is configured to exchange heat with the energy storage system, and the second cooling medium loop is configured to cool the charging system; and the first cooling medium loop and the second cooling medium loop may communicate or exchange heat, so that a cooling medium in the second cooling medium loop exchanges heat with the energy storage system.

In such a setting, when the charging system works, the second cooling medium loop may absorb heat generated by the charging system, and directly or indirectly transfer the heat to the second cooling medium loop, and the second cooling medium loop may provide heat to maintain a temperature of the energy storage system, to effectively transfer heat between the charging system and the energy storage system in some working conditions.

In a possible implementation, the heat exchange assembly may further include a charger heat exchanger, and the charger heat exchanger is connected in the second cooling medium loop and is configured to exchange heat with the charging system.

The cooling medium in the second cooling medium loop may efficiently exchange heat with the charging system by using the charger heat exchanger, to reduce a heat dissipation loss when the charging system works.

In a possible implementation, the heat exchange assembly further includes at least one liquid heat exchanger, the liquid heat exchanger is configured to perform heat exchange between different cooling medium loops, the liquid heat exchanger includes a first liquid heat exchange channel and a second liquid heat exchange channel, and a first liquid heat exchange channel and a second liquid heat exchange channel of a same liquid heat exchanger exchange heat.

The liquid heat exchanger is disposed, to transfer heat of a cooling medium loop with a high temperature to a cooling medium loop with a low temperature, so that when different cooling medium loops does not directly communicate, heat is exchanged efficiently, to avoid a loss of heat generated in a process in which the cooling medium flows.

In a possible implementation, the liquid heat exchanger may include a first liquid heat exchanger, the second cooling medium loop is connected to a first liquid heat exchange channel of the first liquid heat exchanger, and a second liquid heat exchange channel of the first liquid heat exchanger communicates with the first cooling medium loop or exchanges heat with the first cooling medium loop.

The first liquid heat exchanger may be used to transfer heat of the second cooling medium loop to the first cooling medium loop, or transfer heat of the first cooling medium loop to the second cooling medium loop.

In a possible implementation, the heat exchange assembly may further include a first energy storage heat exchanger, and the first energy storage heat exchanger is connected in the first cooling medium loop and is configured to exchange heat with the energy storage system through a phase transition of the cooling medium.

In such a setting, the cooling medium in the first cooling medium loop changes a phase state when flowing through the first energy storage heat exchanger, and absorbs or releases heat in this process, to heat or reduce a temperature of the energy storage system, so as to improve heat exchange efficiency.

In a possible implementation, the first cooling medium loop may further include a first heat pump assembly, a first air heat exchanger, and a first throttle, and the first heat pump assembly, the first air heat exchanger, the first throttle, and the first energy storage heat exchanger are sequentially connected; a first terminal of the first liquid heat exchanger is connected to the first air heat exchanger, and a second terminal of the first liquid heat exchanger is connected between the first heat pump assembly and the first energy storage heat exchanger; the heat exchange assembly may further include a first valve assembly, and the first valve assembly is configured to control a connection state of the first liquid heat exchanger in the first cooling medium loop; and the first heat pump assembly includes a first compressor and a first reversing valve that are sequentially connected, the first compressor and the first reversing valve each are connected in the first cooling medium loop, the first compressor is configured to drive a cooling medium in the first cooling medium loop to flow, and the first reversing valve is configured to change a flow direction of the cooling medium in the first cooling medium loop.

In such a setting, the first cooling medium loop may form a complete path on which the cooling medium cyclically flows, and when the first cooling medium loop does not exchange heat with another cooling medium loop, the phase transition of the cooling medium may be separately performed to cool or heat the energy storage system.

In a possible implementation, the first valve assembly may include a first connection valve and a second connection valve, the first cooling medium loop further includes a first intermediate connection pipe, the first connection valve is connected between the first air heat exchanger and the first throttle, the first terminal of the first liquid heat exchanger is connected between the first connection valve and the first air heat exchanger, the second terminal of the first liquid heat exchanger is connected between the first connection valve and the first throttle by using the first intermediate connection pipe, and the second connection valve is connected in the first intermediate connection pipe.

A first cooling medium circulation loop may be changed based on an on-off change of different connection valves in the first valve assembly, so that the cooling medium in the first cooling medium circulation loop flows through the first liquid heat exchanger, to exchange heat with the cooling medium in the second cooling medium loop. In this way, when the charging system works in a low-temperature state, heat of the charging system is transferred to the energy storage system.

In a possible implementation, the first valve assembly may further include a third connection valve and a fourth connection valve, the second terminal of the first liquid heat exchanger is connected between the first heat pump assembly and the first energy storage heat exchanger by using the third connection valve, the first cooling medium loop further includes a second throttle, and the fourth connection valve and the second throttle are connected in parallel between a first terminal of the first air heat exchanger and the first terminal of the first liquid heat exchanger.

The third connection valve and the fourth connection valve are further disposed, to change the first cooling medium circulation loop, so that the first energy storage heat exchanger and the first liquid heat exchanger form two independent branches. In this case, when an ambient temperature is high, one of the energy storage system and the charging system may be cooled, or the energy storage system and the charging system may be simultaneously cooled.

In a possible implementation, the cooling medium loop may further include a third cooling medium loop; the liquid heat exchanger may further include a second liquid heat exchanger, a first liquid heat exchange channel of the second liquid heat exchanger is connected in the first cooling medium loop, a second liquid heat exchange channel of the second liquid heat exchanger is controllably connected in the third cooling medium loop, and the second liquid heat exchange channel of the first liquid heat exchanger is controllably connected in the third cooling medium loop; and when both the second liquid heat exchange channel of the second liquid heat exchanger and the second liquid heat exchange channel of the first liquid heat exchanger are in a connected state, the third cooling medium loop performs heat exchange between the first cooling medium loop and the second cooling medium loop.

The third cooling medium loop is disposed, so that a cooling medium loop independent of the first cooling medium loop and the second cooling medium loop can be used as a medium, to implement indirect heat exchange between the first cooling medium loop and the second cooling medium loop. In addition, in different working states, the third cooling medium loop may further perform independent heat exchange with each of the first cooling medium loop and the second cooling medium loop.

In a possible implementation, the third cooling medium loop may include a second heat pump assembly, a second air heat exchanger, a third throttle, and a fourth throttle, and the second heat pump assembly, the second air heat exchanger, and the liquid heat exchanger are sequentially connected; the third throttle is connected between a first terminal of the first liquid heat exchanger and the second air heat exchanger, a second terminal of the first liquid heat exchanger is connected to the heat pump assembly, the fourth throttle is connected between a first terminal of the second liquid heat exchanger and the second air heat exchanger, and a second terminal of the second liquid heat exchanger is connected to the heat pump assembly; and the second heat pump assembly includes a second compressor and a second reversing valve, the second compressor and the second reversing valve are both connected in the third cooling medium loop, the second compressor is configured to drive a cooling medium in the third cooling medium loop to flow, and the second reversing valve is configured to change a flow direction of the cooling medium in the third cooling medium loop.

In such a setting, the flow direction of the cooling medium in the third cooling medium loop is changed, to separately implement different functions of the liquid heat exchanger in the third cooling medium loop. To be specific, the liquid heat exchanger not only may be used as a condenser to heat, but also may be used as an evaporator to absorb heat to reduce a temperature.

In a possible implementation, the heat exchange assembly further includes a second valve assembly, and the second valve assembly is configured to separately control connection states between the third cooling medium loop and both of the first liquid heat exchanger and the second liquid heat exchanger; and the second valve assembly includes a fifth connection valve and a sixth connection valve, the third cooling medium loop further includes a second intermediate connection pipe, the fifth connection valve is connected between the fourth throttle and the second air heat exchanger, the first terminal of the first liquid heat exchanger is connected to the third throttle, the second terminal of the first liquid heat exchanger is connected between the fifth connection valve and the fourth throttle by using the second intermediate connection pipe, and the sixth connection valve is connected in the second intermediate connection pipe.

The second valve assembly is disposed, to change a circulation path of the cooling medium in the third cooling medium loop, so that the third cooling medium loop may absorb heat of the second cooling medium loop, and heat the first cooling medium loop when exchanging heat with the first cooling medium loop based on the heat, to improve energy utilization.

In a possible implementation, the second valve assembly further includes a seventh connection valve and an eighth connection valve, the seventh connection valve is connected between the second terminal of the first liquid heat exchanger and the second heat pump assembly, and two terminals of the eighth connection valve are respectively connected in parallel to two terminals of the third throttle.

The seventh connection valve and the eighth connection valve are further disposed, to change the flow path of the cooling medium in the third cooling medium loop, so that when a working temperature of the charging system is high, the cooling medium in the third cooling medium loop flows through the first liquid heat exchanger to absorb heat of a first refrigerant loop, to cool and reduce a temperature of the charging system.

In a possible implementation, the first cooling medium loop includes a second energy storage heat exchanger and a third air heat exchanger, the second energy storage heat exchanger, the third air heat exchanger, and the first liquid heat exchange channel of the second liquid heat exchanger are sequentially connected, and the second energy storage heat exchanger is configured to exchange heat with the energy storage system; and the first cooling medium loop further includes a first control valve, the first control valve is connected between the third air heat exchanger and the second liquid heat exchanger, a first interface and a second interface of the first control valve are respectively connected to a first terminal of the third air heat exchanger and the first terminal of the second liquid heat exchanger, and a third interface of the first control valve is connected between a second terminal of the second liquid heat exchanger and the second energy storage heat exchanger.

In such a setting, when a working temperature of the energy storage system is high and heat needs to be dissipated, the first cooling medium loop may have two heat dissipation modes: air-liquid heat exchange and liquid-liquid heat exchange. The first control valve may be used to select an unused cooling medium flowing loop, so that different heat dissipation modes or heat dissipation mode combinations are selected in different temperature states, to ensure that energy consumption is reduced when heat dissipation efficiency is enough.

In a possible implementation, the second cooling medium loop further includes a fourth air heat exchanger and a second control valve, the second control valve is connected between the charger heat exchanger and the first liquid heat exchanger, and a first interface and a second interface of the second control valve are respectively connected to one terminal of the charger heat exchanger and one terminal of the first liquid heat exchanger; and a first terminal of the fourth air heat exchanger is connected to a third interface of the second control valve, and a second terminal of the fourth air heat exchanger is connected to the other terminal of the first liquid heat exchanger.

In such a setting, when the second cooling medium loop transfers heat of the charging system to the first cooling medium loop, the fourth air heat exchanger may be used to dissipate heat of the cooling medium in the second cooling medium loop, to help cool and reduce a temperature of the charging system.

In a possible implementation, the second cooling medium loop further includes a third control valve, a first interface and a second interface of the third control valve are respectively connected to the fourth air heat exchanger and the charger heat exchanger, and a third interface of the third control valve is connected between the second control valve and the first liquid heat exchanger.

In such a setting, when a working temperature of the charging system is high and heat needs to be dissipated, the second cooling medium loop may have two heat dissipation modes: air-liquid heat exchange and liquid-liquid heat exchange. The second control valve and the third control valve may be used to select an unused cooling medium flowing loop, so that different heat dissipation modes or heat dissipation mode combinations are selected in different temperature states, to ensure that energy consumption is reduced when heat dissipation efficiency is enough.

In a possible implementation, the heat exchange assembly further includes a third valve assembly, the third valve assembly is disposed in the cooling medium loop, and the third valve assembly is configured to control the first cooling medium loop and the second cooling medium loop to be disconnected from each other or communicate with each other; and when the first cooling medium loop and the second cooling medium loop communicate with each other, the cooling medium flow in the second cooling medium loop directly flows through the first cooling medium loop, to exchange heat with the energy storage system.

The third valve assembly is disposed, so that the first cooling medium loop and the second cooling medium loop can be independent of each other or the first cooling medium loop and the second cooling medium loop can form an entire cooling medium circulation loop. In a thermal management process, based on an ambient temperature or a heat emission state, independent temperature control of the energy storage system and the charging system may be implemented, or the energy storage system and the charging system may exchange heat, to reduce energy consumption and improve energy utilization.

In a possible implementation, the cooling medium loops may further include a fourth cooling medium loop, the at least one liquid heat exchanger includes a third liquid heat exchanger and a fourth liquid heat exchanger, a first liquid heat exchange channel of the third liquid heat exchanger is connected in the first cooling medium loop, a first liquid heat exchange channel of the fourth liquid heat exchanger is connected in the second cooling medium loop, and a second liquid heat exchange channel of the third liquid heat exchanger and a second liquid heat exchange channel of the fourth liquid heat exchanger are connected in parallel in the fourth cooling medium loop; and the third liquid heat exchanger is configured to enable the fourth cooling medium loop and the first cooling medium loop to exchange heat, and the fourth liquid heat exchanger is configured to enable the fourth cooling medium loop and the second cooling medium loop to exchange heat.

The fourth cooling medium loop is disposed, to implement independent thermal management and temperature control of a first refrigerant loop and a second refrigerant loop, to adapt to a requirement for different working modes at different ambient temperatures, and ensure that the energy storage system and the charging system can have a proper working temperature.

In a possible implementation, the first cooling medium loop includes a third energy storage heat exchanger and a fifth air heat exchanger, the third energy storage heat exchanger is configured to exchange heat with the energy storage system, and the third energy storage heat exchanger, the fifth air heat exchanger, and a first liquid heat exchange channel of the third liquid heat exchanger are sequentially connected; and the third valve assembly includes a fourth control valve, the fourth control valve is connected between the fifth air heat exchanger and the first liquid heat exchange channel of the third liquid heat exchanger, a first interface of the fourth control valve is connected to the fifth air heat exchanger, and a second interface and a third interface of the fourth control valve are respectively connected to two opposite terminals of the first liquid heat exchange channel of the third liquid heat exchanger.

In such a setting, the first cooling medium loop may have two heat dissipation modes: air-liquid heat exchange and liquid-liquid heat exchange. The fourth control valve may be used to select an unused cooling medium flowing loop, so that different heat dissipation modes or heat dissipation mode combinations are selected in different temperature states, to ensure that energy consumption is reduced when heat dissipation efficiency is enough.

In a possible implementation, the heat exchange assembly further includes an electric heating unit, the electric heating unit is disposed in the first cooling medium loop, and is configured to heat the cooling medium in the first cooling medium loop, and the electric heating unit is connected between the fifth air heat exchanger and the third energy storage heat exchanger.

The heating unit is disposed, to separately heat the first cooling medium loop. When the charging system does not work or working heat of the charging system is insufficient to increase the working temperature of the energy storage system to a value within a proper threshold range, the heating unit may be used to efficiently increase a temperature of the energy storage system.

In a possible implementation, the third valve assembly further includes a fifth control valve and a sixth control valve, a first interface and a second interface of the fifth control valve are connected in the second cooling medium loop, and a third interface of the fifth control valve is connected in the first cooling medium loop; and a first interface and a second interface of the sixth control valve are connected in the first cooling medium loop, and a third interface of the sixth control valve is connected in the second cooling medium loop.

The fifth control valve and the sixth control valve are disposed, so that the first cooling medium loop and the second cooling medium loop can be accurately and efficiently switched between a connected state and a disconnected state, to implement different working modes at different ambient temperatures.

In a possible implementation, the second cooling medium loop further includes a sixth air heat exchanger; and the third valve assembly further includes a seventh control valve, a first interface of the seventh control valve and a first interface of the sixth control valve are respectively connected to two opposite terminals of the sixth air heat exchanger, a third interface of the seventh control valve and a third interface of the sixth control valve are respectively connected to two terminals of the first liquid heat exchange channel of the fourth liquid heat exchanger, and a second interface of the seventh control valve and a second interface of the sixth control valve are respectively connected to two opposite terminals of the charger heat exchanger.

In such a setting, when a working temperature of the charging system is high and heat needs to be dissipated, the second cooling medium loop may have two heat dissipation modes: air-liquid heat exchange and liquid-liquid heat exchange. The sixth control valve and the seventh control valve may be used to select an unused cooling medium flowing loop, so that different heat dissipation modes or heat dissipation mode combinations are selected in different temperature states, to ensure that energy consumption is reduced when heat dissipation efficiency is enough.

In a possible implementation, the fourth cooling medium loop includes a third compressor, a seventh air heat exchanger, a fifth throttle, and a sixth throttle; and an outlet of the third compressor is connected to an inlet of the seventh air heat exchanger, the third liquid heat exchanger and the fourth liquid heat exchanger are connected in parallel between an inlet of the third compressor and an outlet of the seventh air heat exchanger, the fifth throttle is connected between the third liquid heat exchanger and the outlet of the seventh air heat exchanger, and the sixth throttle is connected between the fourth liquid heat exchanger and the outlet of the seventh air heat exchanger.

In such a setting, the third liquid heat exchanger and the fourth liquid heat exchanger may form a parallel structure in the fourth cooling medium loop, so that thermal management may be separately performed on the first cooling medium loop and the second cooling medium loop that correspond to the third liquid heat exchanger and the fourth liquid heat exchanger.

Embodiments of this application provide an energy storage and charging station. Heat of the energy storage system and heat of the charging system are managed in a centralized manner, so that the energy storage system and the charging system can exchange heat by using the heat exchange assembly. The cooling medium in the cooling medium loop separately flows through the charging system and the energy storage system, and the charging system and the energy storage system each exchange heat with the cooling medium loop. Heat generated when the charging system works is transferred, through the cooling medium loop, to the energy storage system for use, to reduce energy consumption required to heat the energy storage system to maintain a temperature, and improve energy use efficiency.

### BRIEF DESCRIPTION OF DRAWINGS

FIG. 1 is a diagram of an architecture of an energy storage and charging station according to an embodiment of this application;
FIG. 2 is a schematic diagram of a first energy storage and charging station according to an embodiment of this application;
FIG. 3 is a schematic diagram in which a first energy storage and charging station is in a first mode according to an embodiment of this application;
FIG. 4 is a schematic diagram in which a first energy storage and charging station is in a second mode according to an embodiment of this application;
FIG. 5 is a schematic diagram in which a first energy storage and charging station is in a third mode according to an embodiment of this application;
FIG. 6 is a schematic diagram in which a first energy storage and charging station is in a fourth mode according to an embodiment of this application;
FIG. 7 is a schematic diagram in which a first energy storage and charging station is in a fifth mode according to an embodiment of this application;
FIG. 8 is a schematic diagram in which a first energy storage and charging station is in a sixth mode according to an embodiment of this application;
FIG. 9 is a schematic diagram of a second energy storage and charging station according to an embodiment of this application;
FIG. 10 is a schematic diagram in which a second energy storage and charging station is in a first mode according to an embodiment of this application;
FIG. 11 is a schematic diagram in which a second energy storage and charging station is in a second mode according to an embodiment of this application;
FIG. 12 is a schematic diagram in which a second energy storage and charging station is in a third mode according to an embodiment of this application;
FIG. 13 is a schematic diagram in which a second energy storage and charging station is in a fourth mode according to an embodiment of this application;
FIG. 14 is a schematic diagram in which a second energy storage and charging station is in a fifth mode according to an embodiment of this application;
FIG. 15 is a schematic diagram in which a second energy storage and charging station is in a sixth mode according to an embodiment of this application;
FIG. 16 is a schematic diagram of a third energy storage and charging station according to an embodiment of this application;
FIG. 17 is a schematic diagram in which a third energy storage and charging station is in a first mode according to an embodiment of this application;
FIG. 18 is a schematic diagram in which a third energy storage and charging station is in a second mode according to an embodiment of this application;
FIG. 19 is a schematic diagram in which a third energy storage and charging station is in a third mode according to an embodiment of this application;
FIG. 20 is a schematic diagram in which a third energy storage and charging station is in a fourth mode according to an embodiment of this application;
FIG. 21 is a schematic diagram in which a third energy storage and charging station is in a fifth mode according to an embodiment of this application; and
FIG. 22 is a schematic diagram in which a third energy storage and charging station is in a sixth mode according to an embodiment of this application.

Descriptions of reference numerals:
100: Heat exchange assembly; 101: First cooling medium loop; 102: Second cooling medium loop; 110: Charger heat exchanger; 111: First energy storage heat exchanger; 112: Second energy storage heat exchanger; 113: Third energy storage heat exchanger; 114: Electric heating unit;
121: First intermediate connection pipe; 122: Second intermediate connection pipe; 123: Third intermediate connection pipe; 124: Fourth intermediate connection pipe;
131: First liquid heat exchanger; 132: Second liquid heat exchanger; 133: Third liquid heat exchanger; 134: Fourth liquid heat exchanger;
141: First air heat exchanger; 142: Second air heat exchanger; 143: Third air heat exchanger; 144: Fourth air heat exchanger; 145: Fifth air heat exchanger; 146: Sixth air heat exchanger; 147: Seventh air heat exchanger;
151: First compressor; 152: First reversing valve; 153: Second compressor; 154: Second reversing valve; 155: Third compressor; 156: Liquid storage tank;
161: First throttle; 162: Second throttle; 163: Third throttle; 164: Fourth throttle; 165: Fifth throttle; 166: Sixth throttle;
171: First connection valve; 172: Second connection valve; 173: Third connection valve; 174: Fourth connection valve; 175: Fifth connection valve; 176: Sixth connection valve; 177: Seventh connection valve; 178: Eighth connection valve;
181: First control valve; 182: Second control valve; 183: Third control valve; 184: Fourth control valve; 185: Fifth control valve; 186: Sixth control valve; 187: Seventh control valve; and
191: First liquid pump; 192: Second liquid pump; 193: Third liquid pump; 194: Fourth liquid pump; 200: Energy storage system; 300: Charging system.

### DESCRIPTION OF EMBODIMENTS

Terms used in embodiments of this application are only used to explain specific embodiments of this application, but are not intended to limit this application.

An embodiment of this application provides an energy storage and charging station, configured to charge an electric component or device such as an electric vehicle or an electric bicycle. The energy storage and charging station may be disposed indoors or outdoors, and may be connected to an urban power grid. The energy storage and charging station includes an energy storage system and a charging system. The charging system may be connected to an external electric component that needs to be charged, and the charging system may directly charge the electric component by using the power grid, or the energy storage system may supply power to the charging system, to charge the electric component based on stored electric energy of the energy storage system.

The charging system usually includes an electric energy conversion unit. The electric energy conversion unit may be specifically a direct current/alternating current conversion unit (Alternating Current/Direct Current, AC/DC converter) and a direct current/direct current conversion unit (Direct Current/Direct Current, DC/DC converter), and may convert a high-voltage alternating current output by the power grid, to adapt to an input voltage required for charging the electric component. The electric energy conversion unit emits heat due to a current thermal effect when electric energy conversion unit works. If a temperature is too high, a circuit of the electric energy conversion unit may be faulty or even burned. Therefore, when a temperature of an external working environment of the electric energy conversion unit is high and the electric energy conversion unit generates heat, the electric energy conversion unit needs to be cooled to reduce a temperature.

In addition, the energy storage system mainly includes a battery. To maintain a good energy storage state of an electrochemical cell of the battery, a temperature of a working environment of the battery needs to be maintained in a proper range. A lithium-ion battery commonly used in the energy storage system is used as an example. An optimal working temperature range of the lithium-ion battery is narrow, and is usually between 20°C and 40°C. Therefore, when an ambient temperature is low, the battery needs to be heated to maintain a temperature, and when the ambient temperature is high, the battery needs to be cooled to reduce a temperature, so that the battery is always maintained in a proper working temperature range.

It can be learned that in the energy storage and charging station, a working temperature of the charging system and a working temperature of the energy storage system need to be adjusted by using a thermal management system, to ensure continuous and effective running of a device. The thermal management system mainly has two tasks: cooling to reduce a temperature when the charging system is overheated, and maintaining the working temperature of the energy storage system within a proper range.

In a related technology, the thermal management system controls a temperature of the energy storage system and cools the charging system separately. When adjusting the temperature of the energy storage system, a heater is usually used for heating, and a principle of heating is to use a current thermal effect. The energy storage system is cooled mainly by using an air-water heat exchanger or a plate heat exchanger. Correspondingly, the charging system is usually cooled by using an air-water heat exchanger. A refrigerant circulation loop may be formed in the thermal management system. When performing thermal management on the energy storage system and the charging system, two independent refrigerant circulation loops may be formed in the thermal management system, or the energy storage system and the charging system are correspondingly disposed on two parallel branches of one refrigerant circulation loop that do not interfere with each other.

However, in the foregoing thermal management manner of the energy storage system and the charging system, the energy storage system and the charging system do not establish or perform heat exchange. The energy storage system is heated merely by using the heater, and energy consumption required to maintain a temperature is high. For the charging system, heat generated when the charging system works in a low-temperature scenario is dissipated to an environment, and cannot be used, and consequently, energy is wasted. Consequently, overall energy consumption of the energy storage and charging station is high, and energy utilization is low.

Based on the foregoing technical problem, an embodiment of this application provides an energy storage and charging station. Heat of an energy storage system and heat of a charging system are managed in a centralized manner, so that the energy storage system and the charging system can exchange heat. In addition to implementing independent thermal management functions of the energy storage system and the charging system, in a low-temperature application scenario, the charging system works and emits heat. When the energy storage system needs to be heated to maintain a temperature, heat generated when the charging system works may be transferred to the energy storage system to maintain the temperature, to reduce energy consumption required to heat the energy storage system to maintain a temperature, reduce a heat waste, and improve energy use efficiency of the energy storage and charging station.

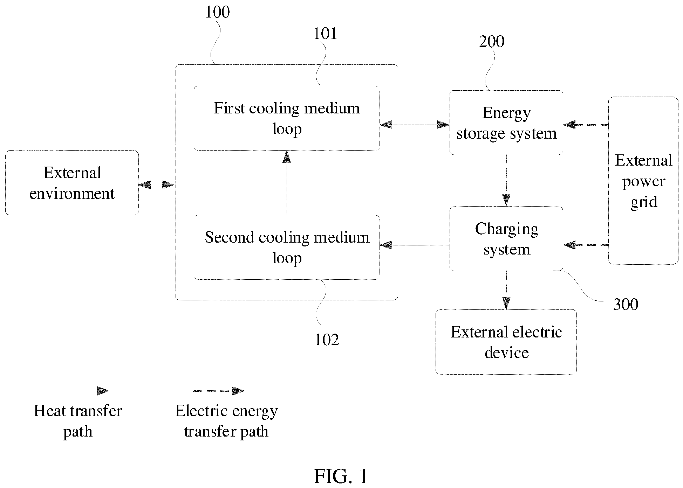

As shown in FIG. 1, an embodiment of this application provides an energy storage and charging station. The energy storage and charging station may include a heat exchange assembly 100, an energy storage system 200, and a charging system 300. The energy storage system 200 is configured to store electric energy, the charging system 300 is configured to charge an electric component, and the heat exchange assembly 100 is configured to perform thermal management on the energy storage system 200 and the charging system 300. The energy storage and charging station is connected to an external urban power grid. In a valley period in which power use is loose, the charging system 300 may directly charge the external electric component by using the power grid. In addition, if a quantity of stored electricity of the energy storage system 200 is not saturated, the external power grid may be used for charging in the valley period, to supplement electric energy. However, in a peak period in which power use is tight, the charging system 300 may charge an external device by using the energy storage system 200, to fully use electric energy resources and reduce electric energy use costs.

The heat exchange assembly 100 may include a cooling medium loop. A cooling medium in the cooling medium loop separately flows through the charging system 300 and the energy storage system 200. Thermal management may be performed on the charging system 300 and the energy storage system 200 by controlling a change of a circulation path of the cooling medium loop. When thermal management is performed on the charging system 300, the cooling medium in the cooling medium loop may exchange heat with the charging system 300 when flowing through the charging system 300, and when thermal management is performed on the energy storage system 200, the cooling medium in the cooling medium loop may exchange heat with the energy storage system 200 when flowing through the energy storage system 200.

It can be understood that, when a working temperature of the charging system 300 is high, the cooling medium in the cooling medium loop may absorb heat of the charging system 300 to reduce the temperature of the charging system 300. When an ambient temperature of the energy storage system 200 goes beyond a proper working range of the energy storage system 200, the cooling medium may exchange heat with the energy storage system 200, to maintain the working temperature of the energy storage system 200 in a proper range.

In addition, in a low-temperature working environment, heat generated when the charging system 300 works may be transferred to the cooling medium in the cooling medium loop, and the cooling medium in the cooling medium loop may transfer the heat to the energy storage system 200 for heating, so that the heat generated when the charging system 300 works is transferred to the energy storage system 200 through the cooling medium loop, so that the charging system 300 and the energy storage system 200 can exchange heat, to reduce energy consumption required to heat the energy storage system to maintain a temperature, and improve energy use efficiency.

It should be noted that, when the energy storage system 200 needs to dissipate heat, heat of the energy storage system 200 may be conducted through the cooling medium loop, and finally transferred to an external environment. When the energy storage system 200 needs to be heated, there may be different heat sources. Heat source 1: The cooling medium in the cooling medium loop absorbs heat from the external environment through circulation, and transfers the heat to the energy storage system 200 through the cooling medium. Heat source 2: The heat exchange assembly 100 may be provided with a component that converts electric energy into heat energy, to heat the cooling medium, so as to transfer heat to the energy storage system 200. Heat source 3: The cooling medium may absorb heat from the charging system 300, and transfer the heat to the energy storage system 200 through circulation of the cooling medium loop. In a specific implementation of the cooling medium loop, there may be any one or a combination of two or more of the foregoing three heating manners of the energy storage system 200.

In the energy storage and charging station provided in this embodiment of this application, when performing thermal management on the energy storage system 200 and the charging system 300, the heat exchange assembly 100 may implement a plurality of specific working modes, and may select a specific working mode based on a specific working environment. For example, main working modes of the heat exchange assembly 100 are as follows: 1. The energy storage system 200 is heated separately. 2. The energy storage system 200 is heated based on working heat of the charging system 300, and the charging system 300 is not cooled separately. 3. The energy storage system 200 is heated based on working heat of the charging system 300, and the charging system 300 is not cooled separately. 4. The energy storage system 200 is cooled separately. 5. The charging system 300 is cooled separately. 6. The energy storage system 200 and the charging system 300 are simultaneously cooled.

To implement the plurality of working modes, the heat exchange assembly 100 may include at least two cooling medium loops. For example, as shown in FIG. 1, the heat exchange assembly 100 may include two cooling medium loops, the two cooling medium loops are a first cooling medium loop 101 and a second cooling medium loop 102, the first cooling medium loop 101 may be configured to exchange heat with the energy storage system 200, the second cooling medium loop 102 may be configured to cool the charging system 300, and the first cooling medium loop 101 and the second cooling medium loop 102 may communicate or exchange heat.

It can be understood that the heat exchange assembly 100 may further include three or four cooling medium loops. In this embodiment of this application, that the heat exchange assembly 100 includes two cooling medium loops is first used as an example for description.

The energy storage system 200 may be heated and cooled separately by exchanging heat with the first cooling medium loop 101, the charging system 300 may be cooled separately by exchanging heat with the second cooling medium loop 102, and the charging system 300 and the energy storage system 200 may exchange heat through heat exchange between the first cooling medium loop 101 and the second cooling medium loop 102. In this case, a cooling medium in the second cooling medium loop 102 may directly or indirectly exchange heat with the energy storage system 200.

It should be noted that, in a low-temperature state, when the energy storage system 200 needs to be heated based on working heat of the charging system 300, after the cooling medium in the second cooling medium loop 102 absorbs the heat of the charging system 300, if the first cooling medium loop 101 and the second cooling medium loop 102 communicate, the cooling medium in the second cooling medium loop 102 may directly flow into the first cooling medium loop 101, and circulate in the first cooling medium loop 101 and the second cooling medium loop 102, and the heat is transferred to the energy storage system 200 in a direct heat exchange manner; or if the first cooling medium loop 101 and the second cooling medium loop 102 do not communicate and a cooling medium in the first cooling medium loop 101 and the cooling medium in the second cooling medium loop 102 circulate separately, heat is transferred to the energy storage system 200 in an indirect heat exchange manner.

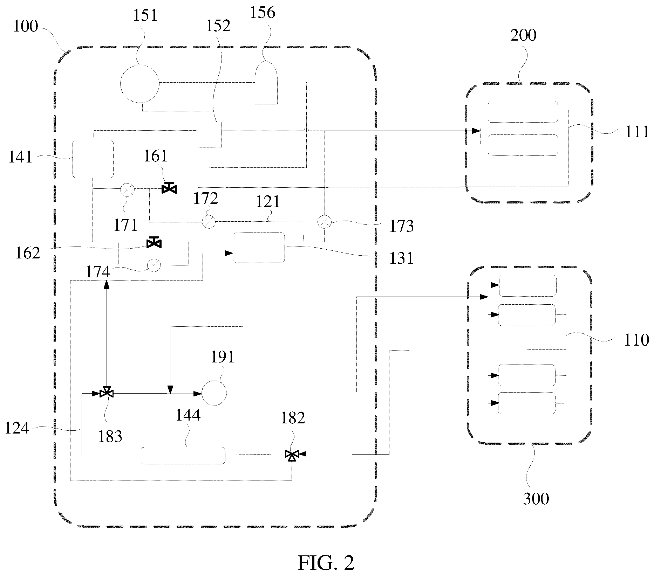

Refer to FIG. 2, the heat exchange assembly 100 may further include a charger heat exchanger 110, so that the cooling medium in the second cooling medium loop 102 can efficiently exchange heat with the charging system 300. The charger heat exchanger 110 may be connected in the second cooling medium loop 102, is disposed opposite to the charging system 300, and may perform heat exchange. When a temperature of a charging component needs to be reduced, heat may be efficiently absorbed, and when the working heat of the charging system 300 needs to be used, a heat dissipation loss when the charging system 300 works may be reduced.

In addition, the energy storage system 200 may also exchange heat with the first cooling medium loop 101 by using an energy storage heat exchanger, to ensure accuracy of maintaining the temperature of the energy storage system 200 and reduce a deviation or a delay of adjusting the temperature.

In addition to a manner in which the cooling medium loop exchanges heat with the energy storage system 200 and a heat exchange system, a circulation path between different cooling medium loops may change, and different cooling medium loops or the cooling medium loop and the external environment may exchange heat in different manners.

Different cooling medium loops may exchange heat by using a liquid heat exchanger. The heat exchange assembly 100 may include at least one liquid heat exchanger. The liquid heat exchanger includes a first liquid heat exchange channel and a second liquid heat exchange channel, and a first liquid heat exchange channel and a second liquid heat exchange channel of a same liquid heat exchanger exchange heat. When the cooling medium loop is disposed, different cooling medium loops may communicate with different liquid heat exchange channels of the liquid heat exchanger, to transfer heat of a cooling medium loop with a high temperature to a cooling medium loop with a low temperature. When different cooling medium loops do not directly communicate, efficient heat exchange is implemented, to avoid a loss of heat generated in a process in which a cooling medium flows.

Persons skilled in the art may understand that the cooling medium may be a refrigerant or a secondary refrigerant. When the cooling medium is a refrigerant, the cooling medium absorbs heat or releases heat through a phase transition. When the cooling medium is a secondary refrigerant, a phase state of the cooling medium does not change in a heat exchange process. A specific heat exchange manner may be heat conduction, heat convection, or the like. For example, the refrigerant may include but is not limited to tetrafluoroethane (Chemical formula: C₂H₂F₄, R134a for short), chlorodifluoromethane (Chemical formula: CHCIF₂, R22 for short), or another mixed refrigerant, for example, a mixed refrigerant (R410a for short) formed by mixing difluoromethane and pentafluoroethane in a proportion of 50%. The secondary refrigerant may include but is not limited to a secondary refrigerant such as a glycol aqueous solution, a fluorinated liquid, and oil. Unless otherwise specified, the cooling medium in the following embodiments of this application may be a refrigerant or a secondary refrigerant, and no specific examples are provided for description.

It should be noted that the charging system 300 may include a plurality of electric energy conversion modules, including but not limited to an AC/DC module and a DC/DC module. When the charger heat exchanger 110 exchanges heat with the charging system 300, a cooling medium may be divided into a plurality of branches and enter the coolant plate to dissipate heat for each module. The energy storage system 200 may include a plurality of battery packs, the battery pack may include a plurality of batteries, and the energy storage heat exchanger may also be divided into a plurality of branches and then enter a coolant plate inside each battery pack to exchange heat with a battery.

In this embodiment of this application, the energy storage system 200, the charging system 300, and the heat exchange assembly 100 implement different working modes in different working environments by using the cooling medium loop, and switch between different working modes mainly based on the change of the circulation path of the cooling medium loop in the heat exchange assembly 100. The following describes a specific structure of the cooling medium loop in the heat exchange assembly 100, to describe in detail different thermal management modes of the energy storage and charging station.

Refer to FIG. 2. In a first possible implementation, the first cooling medium loop 101 may dissipate heat of or heat the energy storage system 200 through circulation of the cooling medium in the first cooling medium loop 101, and the first cooling medium loop 101 may exchange heat with the second cooling medium loop 102, to absorb heat of the second cooling medium loop 102 to dissipate heat of the charging system 300, or absorb heat dissipated by the charging system 300 to heat the energy storage system 200.

Refer to FIG. 2. The liquid heat exchanger may include a first liquid heat exchanger 131, and may transfer the heat of the second cooling medium loop 102 to the first cooling medium loop 101 by using the first liquid heat exchanger 131, or may transfer heat of the first cooling medium loop 101 to the second cooling medium loop 102. The second cooling medium loop 102 is connected to a first liquid heat exchange channel of the first liquid heat exchanger 131, and a second liquid heat exchange channel of the first liquid heat exchanger 131 communicates with the first cooling medium loop 101.

Refer to FIG. 2. The heat exchange assembly 100 may include a first energy storage heat exchanger 111. The first energy storage heat exchanger 111 is connected in the first cooling medium loop 101, the cooling medium in the first cooling medium loop 101 may be a refrigerant, the first energy storage heat exchanger 111 is configured to exchange heat with the energy storage system 200 through a phase transition of the cooling medium, and the cooling medium in the first cooling medium loop 101 changes a phase state when flowing through the first energy storage heat exchanger 111, and absorbs or releases heat in this process, to heat or reduce a temperature of the energy storage system 200, so as to improve heat exchange efficiency.

The first cooling medium loop 101 may further include a first heat pump assembly (not shown), a first air heat exchanger 141, and a first throttle 161, so that the first cooling medium loop 101 implements a heat dissipation or heating function. The first heat pump assembly, the first air heat exchanger 141, the first throttle 161, and the first energy storage heat exchanger 111 may be sequentially connected.

A first terminal of the first liquid heat exchanger 131 may be connected to the first air heat exchanger 141, a second terminal of the first liquid heat exchanger 131 may be connected between the first heat pump assembly and the first energy storage heat exchanger 111, the heat exchange assembly 100 may further include a first valve component, and the first valve component is configured to control a connection state of the first liquid heat exchanger 131 in the first cooling medium loop 101.

Still refer to FIG. 2. The first heat pump assembly includes a first compressor 151 and a first reversing valve 152 that are sequentially connected, the first compressor 151 and the first reversing valve 152 are both connected in the first cooling medium loop 101, the first compressor 151 is configured to drive the cooling medium in the first cooling medium loop 101 to flow, and the first reversing valve 152 is configured to change a flow direction of the cooling medium in the first cooling medium loop 101.

It can be understood that, the first cooling medium loop 101 may form a complete path on which the cooling medium cyclically flows, and when the first cooling medium loop 101 does not exchange heat with another cooling medium loop, the phase transition of the cooling medium may be separately performed to cool or heat the energy storage system 200.

It should be noted that, the first compressor 151 is a power source of circulation of the cooling medium in the first cooling medium loop 101, and the first reversing valve 152 may be a four-way reversing valve, a solenoid valve, or a one-way valve combination. The four-way reversing valve is used as an example. The four-way reversing valve may have two working modes, and the two working modes respectively correspond to connection directions of the first compressor 151 in the first cooling medium loop 101, that is, respectively correspond to a forward flow and a reverse flow of the cooling medium. In addition, a liquid storage tank 156 may be connected between the first compressor 151 and the first reversing valve 152, and the liquid storage tank 156 may be configured to store the cooling medium, to ensure that circulation of the first cooling medium loop 101 is continuous and stable.

In order that the heat exchange assembly 100 is switched between different working modes, the first valve assembly may include a first connection valve 171 and a second connection valve 172, the first cooling medium loop 101 may further include a first intermediate connection pipe 121, the first connection valve 171 is connected between the first air heat exchanger 141 and the first throttle 161, a first terminal of the first liquid heat exchanger 131 is connected between the first connection valve 171 and the first air heat exchanger 141, a second terminal of the first liquid heat exchanger 131 is connected between the first connection valve 171 and the first throttle 161 by using the first intermediate connection pipe 121, and the second connection valve 172 is connected in the first intermediate connection pipe 121.

A first cooling medium circulation loop may be changed based on an on-off change of different connection valves in the first valve assembly, so that the cooling medium in the first cooling medium circulation loop flows through the first liquid heat exchanger 131, to exchange heat with the cooling medium in the second cooling medium loop. In this way, when the charging system 300 works in a low-temperature state, heat of the charging system 300 is transferred to the energy storage system 200.

Based on the foregoing composition of the first valve assembly, the first valve assembly may further include a third connection valve 173 and a fourth connection valve 174, the second terminal of the first liquid heat exchanger 131 is connected between the first heat pump assembly and the first energy storage heat exchanger 111 by using the third connection valve 173, the first cooling medium loop 101 further includes a second throttle 162, and the fourth connection valve 174 and the second throttle 162 are connected in parallel between a first terminal of the first air heat exchanger 141 and the first terminal of the first liquid heat exchanger 131.

It can be understood that, the third connection valve 173 and the fourth connection valve 174 are disposed, to change the first cooling medium circulation loop, so that the first energy storage heat exchanger 111 and the first liquid heat exchanger 131 form two independent branches. In this case, when an ambient temperature is high, one of the energy storage system 200 and the charging system 300 may be cooled, or the energy storage system 200 and the charging system 300 may be simultaneously cooled.

In addition, the second cooling medium loop 102 may form a plurality of heat dissipation paths that can be changed, to adapt to a requirement of the charging system 300 for heat dissipation to different degrees. The second cooling medium loop 102 may further include a fourth air heat exchanger 144 and a second control valve 182, the second control valve 182 is connected between the charger heat exchanger 110 and the first liquid heat exchanger 131, and a first interface and a second interface of the second control valve 182 are respectively connected to one terminal of the charger heat exchanger 110 and one terminal of the first liquid heat exchanger 131; and a first terminal of the fourth air heat exchanger 144 is connected to a third interface of the second control valve 182, and a second terminal of the fourth air heat exchanger 144 is connected to the other end of the first liquid heat exchanger 131, so that when transferring heat of the charging system 300 to the first cooling medium loop 101, the second cooling medium loop 102 can dissipate heat of the cooling medium in the second cooling medium loop 102 by using the fourth air heat exchanger 144, to help cool and reduce a temperature of the charging system 300.

The second cooling medium loop 102 may further include a third control valve 183, the third control valve 183 is connected in the fourth intermediate connection pipe 124, a first interface and a second interface of the third control valve 183 are respectively connected to the fourth air heat exchanger 144 and the charger heat exchanger 110, and a third interface of the third control valve 183 is connected between the second control valve 182 and the first liquid heat exchanger 131.

It can be understood that the cooling medium in the second cooling medium loop 102 may be a secondary refrigerant, and a first liquid pump 191 may be connected in the second cooling medium loop 102, to drive the secondary refrigerant to flow. The first liquid pump 191 may be connected to any location of a main circulation loop in the second cooling medium loop 102, for example, may be connected between the first liquid heat exchanger 131 and the charger heat exchanger 110.

When the working temperature of the charging system 300 is high and heat needs to be dissipated, the second cooling medium loop 102 may have two heat dissipation modes: air-liquid heat exchange and liquid-liquid heat exchange. That is, heat is dissipated by using an air heat exchanger and heat is dissipated by using a liquid heat exchanger. The second control valve 182 and the third control valve 183 may be used to select an unused cooling medium flowing loop, so that different heat dissipation modes or heat dissipation mode combinations are selected in different temperature states, to ensure that energy consumption is reduced when heat dissipation efficiency is enough.

It should be noted that, the connection valve may be turned on/off to control conduction/cutoff of the cooling medium loop through opening and closing, and the control valve may be turned on/off to control conduction/cutoff of the cooling medium loop and a branch flow direction. The connection valve may be a bidirectional two-way valve, the control valve may be a three-way valve or another multi-way valve, and the connection valve and the control valve each may be a solenoid valve. A specific structure and a working principle of the solenoid valve are both in the conventional technology, and are not described herein. In addition, a working manner of the liquid heat exchanger is to implement a heat exchange process through heat conduction or heat convection between liquid loops, and a working manner of the air heat exchanger is to perform heat exchange by using external air and the cooling medium loop. Specific structures and working principles of the liquid heat exchanger and the air heat exchanger are both in the conventional technology, and are not described herein.

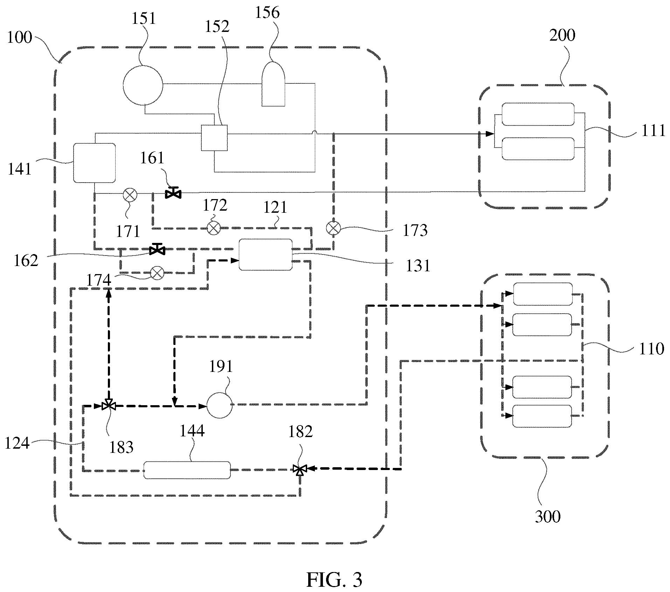

The following describes in detail circulation paths of different cooling medium loops in different working modes in the foregoing implementation.
1. The energy storage system 200 is heated separately.
   Refer to FIG. 3. In this case, the first cooling medium loop 101 runs in a heat pump mode, and the first compressor 151 runs. A high-temperature and high-pressure refrigerant gas discharged by the first compressor 151 passes through the first reversing valve 152, and then enters the first energy storage heat exchanger 111. When flowing through the first energy storage heat exchanger 111, the high-temperature and high-pressure refrigerant gas heats the energy storage system 200, and a refrigerant is condensed into a liquid state. In this case, the first energy storage heat exchanger 111 functions as a condenser. Subsequently, the refrigerant flows through the first throttle 161. At this time, the first connection valve 171 is turned on, and the second connection valve 172 is turned off. A refrigerant flowing out of the first throttle 161 enters the first air heat exchanger 141, absorbs heat of external air in the first air heat exchanger 141, and is evaporated into a gaseous state. Subsequently, the refrigerant passes through the first reversing valve 152 and the liquid storage tank 156, and returns to the first compressor 151, to complete circulation.
2. The energy storage system 200 is heated based on the working heat of the charging system 300, and the charging system 300 is not cooled separately.

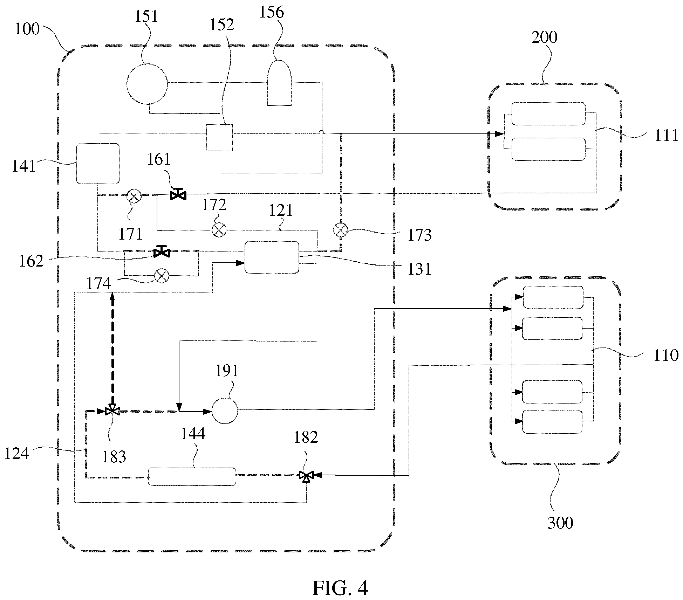

Refer to FIG. 4. In this case, the energy storage system 200 is heated based on residual heat of the charging system 300. The first cooling medium loop 101 runs in a heat pump mode, and the first compressor 151 runs. Ahigh-temperature and high-pressure refrigerant gas discharged by the first compressor 151 passes through the first reversing valve 152, and then enters the first energy storage heat exchanger 111. When flowing through the first energy storage heat exchanger 111, the high-temperature and high-pressure refrigerant gas heats the energy storage system 200, and a refrigerant is condensed into a liquid state. In this case, the first energy storage heat exchanger 111 functions as a condenser. A refrigerant flowing out of the first energy storage heat exchanger 111 flows through the first throttle 161. At this time, the first connection valve 171 is turned off, and the second connection valve 172 is turned on. The refrigerant flows through the first intermediate connection pipe 121, enters the first liquid heat exchanger 131, and exchanges heat with the cooling medium in the second cooling medium loop 102 in the first liquid heat exchanger 131, to absorb heat transferred by the charging system 300. At this time, the first connection valve 171 is in an on state. The refrigerant evaporated into a gaseous state flows into the first air heat exchanger 141, and returns to the first compressor 151 from the first air heat exchanger 141 through the first reversing valve 152 and the liquid storage tank 156, to complete circulation.

In circulation of the second cooling medium loop 102, the first liquid pump 191 runs, the cooling medium enters the charger heat exchanger 110 and is heated based on the working heat of the charging system 300, the first interface and the second interface of the second control valve 182 are connected, and the cooling medium directly flows into the first liquid heat exchanger 131 through the second control valve 182, transfers the heat to the refrigerant in the first cooling medium loop 101, and finally returns to the first liquid pump 191.

3. The energy storage system 200 is heated based on the working heat of the charging system 300, and the charging system 300 is cooled separately.

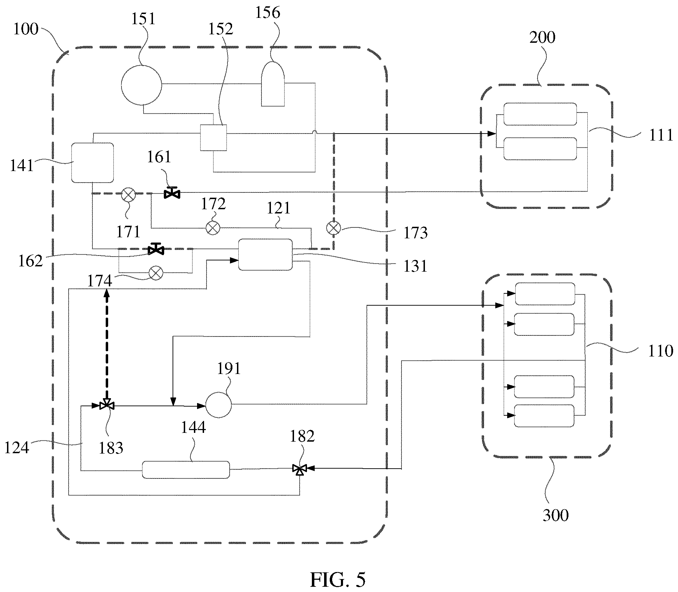

Refer to FIG. 5. In this case, the energy storage system 200 is heated based on residual heat of the charging system 300. A refrigerant circulation path in the first cooling medium loop 101 is the same as that in the second mode, and details are not described herein again.

In circulation of the second cooling medium loop 102, the first liquid pump 191 runs, the cooling medium enters the charger heat exchanger 110 and is heated based on the working heat of the charging system 300, the first interface of the second control valve 182 is connected to both the second interface and the third interface, the cooling medium further enters the fourth air heat exchanger 144 when flowing into the first liquid heat exchanger 131, a cooling medium entering the first liquid heat exchanger 131 transfers heat to the refrigerant in the first cooling medium loop 101, and then returns to the first liquid pump 191, a cooling medium entering the fourth air heat exchanger 144 dissipates heat to the external air, the first interface and the second interface of the third control valve 183 are connected, and a cooling medium flowing out of the fourth air heat exchanger 144 returns to the first liquid pump 191 through the third control valve 183. In this mode, when heat emission power of the charging system 300 is high and exceeds heating power required by the energy storage system 200, some heat may be dissipated to an external environment.

4. The energy storage system 200 is cooled separately.

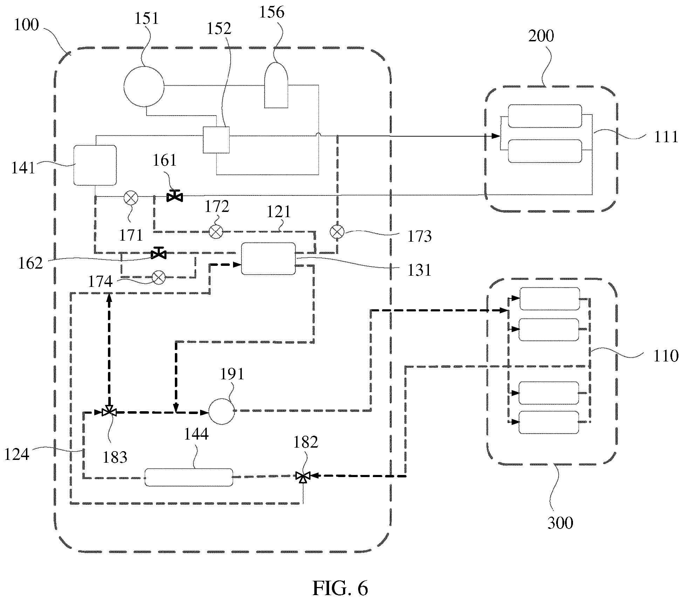

Refer to FIG. 6. In this case, the first cooling medium loop 101 runs in a compressor cooling mode, and the first compressor 151 runs. A high-temperature and high-pressure refrigerant gas discharged by a compressor passes through the first reversing valve 152 and enters the first air heat exchanger 141. In this case, the first air heat exchanger 141 functions as a condenser. Subsequently, after passing through the first connection valve 171, a refrigerant flows through the first throttle 161 and is condensed into a low-temperature and low-pressure refrigerant liquid. The refrigerant liquid enters the first energy storage heat exchanger 111, to absorb heat of the energy storage system 200. In addition, the first energy storage heat exchanger 111 functions as an evaporator, and a refrigerant evaporated into a gas in the first energy storage heat exchanger 111 passes through the first reversing valve 152 and the liquid storage tank 156 and returns to the first compressor 151, to complete circulation.

5. The charging system 300 is cooled separately.

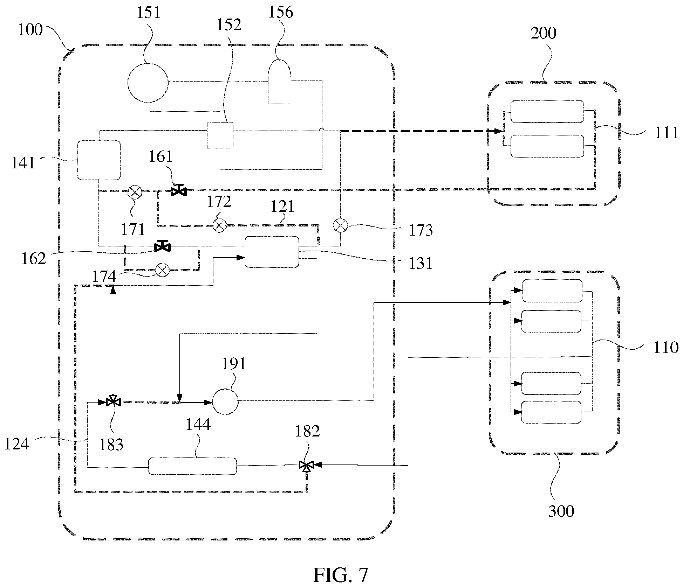

Refer to FIG. 7. In circulation of the second cooling medium loop 102, the first liquid pump 191 runs, and the cooling medium enters the charger heat exchanger 110 from the first liquid pump 191, absorbs heat generated by the charging system 300, and enters the fourth air heat exchanger 144 through the first interface and the third interface of the second control valve 182, to perform heat dissipation and cooling. In this case, if a temperature that is of the cooling medium and that is detected by a temperature detection unit (not shown in the figure) in the system is not higher than a preset value, the first interface and the second interface of the third control valve 183 are connected, and after entering the third control valve 183 through the fourth intermediate connection pipe 124, the cooling medium may directly return to the first liquid pump 191, to complete circulation; or if a temperature that is of the cooling medium and that is detected by a temperature detection unit in the system is higher than a preset value, the first interface and the third interface of the third control valve 183 are connected, and after entering the third control valve 183 through the fourth intermediate connection pipe 124, the cooling medium may flow into the first liquid heat exchanger 131, is further cooled to reduce a temperature by the refrigerant in the first cooling medium loop 101, and then returns to the first liquid pump 191, to complete circulation.

If the second cooling medium loop 102 flows through the first liquid heat exchanger 131, the first cooling medium loop 101 runs in a compressor refrigeration mode, the first compressor 151 runs, and a high-temperature and high-pressure refrigerant gas discharged by a compressor enters the first air heat exchanger 141 through the first reversing valve 152. In this case, the first air heat exchanger 141 functions as a condenser, the first connection valve 171 and the fourth connection valve 174 are both turned off, a refrigerant is condensed into a low-temperature and low-pressure refrigerant liquid through the second throttle 162, and the refrigerant liquid enters the first liquid heat exchanger 131 to absorb heat of the cooling medium in the second cooling medium loop 102. In this case, the first liquid heat exchanger 131 functions as an evaporator, the second connection valve 172 is turned off, the third connection valve 173 is turned on, and a refrigerant evaporated into a gas in the first liquid heat exchanger 131 sequentially passes through the third connection valve 173, the first reversing valve 152, and the liquid storage tank 156 and returns to the first compressor 151, to complete circulation.

6. The energy storage system 200 and the charging system 300 are cooled simultaneously.

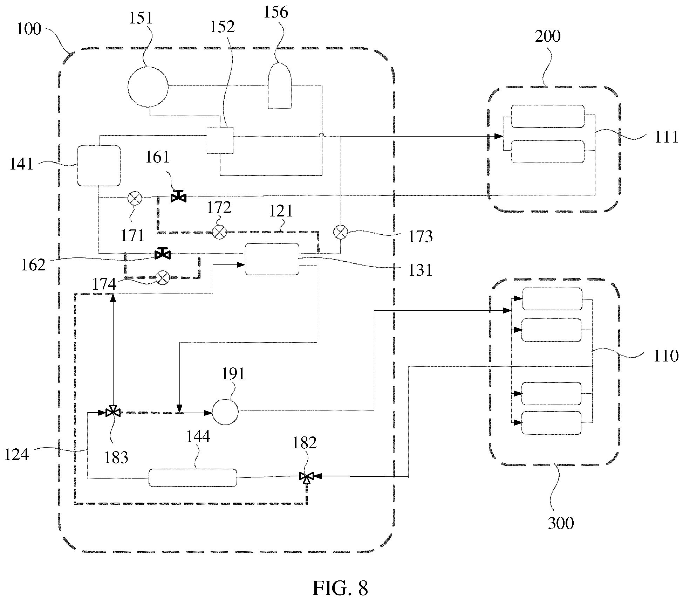

Refer to FIG. 8. In this case, the heat exchange assembly 100 only needs to simultaneously enter the working mode 5 and the working mode 6. Details are not described herein again.

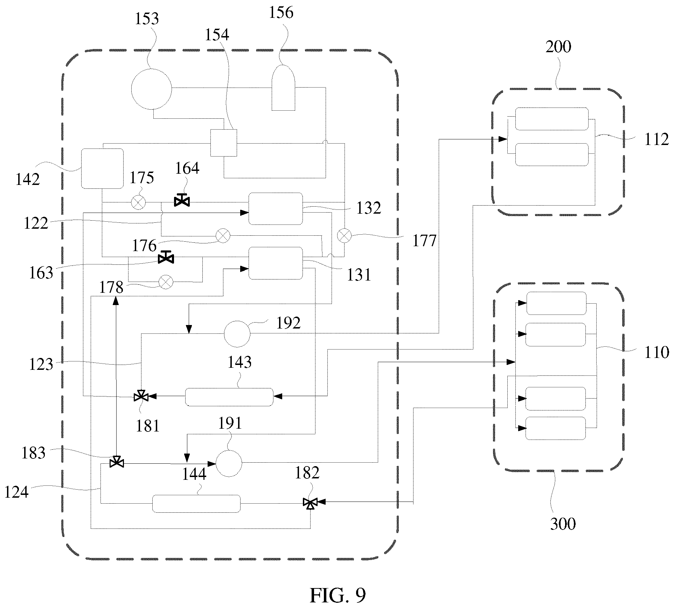

Refer to FIG. 9. Different from the foregoing implementation, in a second possible implementation, a thermal management system including the heat exchange assembly 100 may include a third cooling medium loop in addition to the first cooling medium loop 101 and the second cooling medium loop 102, and the liquid heat exchanger may include a second liquid heat exchanger 132 in addition to the first liquid heat exchanger 131. Independent cooling medium circulation may be formed in each of the first cooling medium loop 101, the second cooling medium loop 102, and the third cooling medium loop, the second cooling medium loop 102 and the third cooling medium loop may exchange heat through the first liquid heat exchanger 131, and the first cooling medium loop 101 and the third cooling medium loop may exchange heat through the second liquid heat exchanger 132.

A first liquid heat exchange channel of the second liquid heat exchanger 132 is connected in the first cooling medium loop 101, a second liquid heat exchange channel of the second liquid heat exchanger 132 is controllably connected in the third cooling medium loop, and the second liquid heat exchange channel of the first liquid heat exchanger 131 is controllably connected in the third cooling medium loop; and when both the second liquid heat exchange channel of the second liquid heat exchanger 132 and the second liquid heat exchange channel of the first liquid heat exchanger 131 are in a connected state, the third cooling medium loop performs heat exchange between the first cooling medium loop 101 and the second cooling medium loop 102.

It can be understood that, the third cooling medium loop is disposed, so that a cooling medium loop independent of the first cooling medium loop 101 and the second cooling medium loop 102 can be used as a medium. The third cooling medium loop may establish a heat exchange relationship between the first cooling medium loop 101 and the external environment, and establish a heat exchange relationship between the second cooling medium loop 102 and the external environment, in other words, enable the energy storage system 200 to exchange heat with the external environment, to implement heat dissipation or heating, and enable the charging system 300 to exchange heat with the external environment, to dissipate heat of the charging system 300. In addition, the third cooling medium loop may establish a heat exchange relationship between the first cooling medium loop 101 and the second cooling medium loop 102, so that the first cooling medium loop 101 and the second cooling medium loop 102 can indirectly exchange heat, to heat the energy storage system 200 based on heat generated when the charging system 300 works.

As shown in FIG. 9, the third cooling medium loop may include a second heat pump assembly (not shown), a second air heat exchanger 142, a third throttle 163, and a fourth throttle 164, and the second heat pump assembly, the second air heat exchanger 142, and the liquid heat exchanger are sequentially connected; the third throttle 163 is connected between a first terminal of the first liquid heat exchanger 131 and the second air heat exchanger 142, a second terminal of the first liquid heat exchanger 131 is connected to the heat pump assembly, the fourth throttle 164 is connected between a first terminal of the second liquid heat exchanger 132 and the second air heat exchanger 142, and a second terminal of the second liquid heat exchanger 132 is connected to the heat pump assembly; and the second heat pump assembly includes a second compressor 153 and a second reversing valve 154, the second compressor 153 and the second reversing valve 154 are both connected in the third cooling medium loop, the second compressor 153 is configured to drive a cooling medium in the third cooling medium loop to flow, and the second reversing valve 154 is configured to change a flow direction of the cooling medium in the third cooling medium loop.

It should be noted that, the cooling medium in the third cooling medium loop may be a refrigerant, a connection manner and a function of the second compressor 153 and the second reversing valve 154 in the third cooling medium loop are similar to a connection manner and a function of the first compressor 151 and the first reversing valve 152 in the first cooling medium loop 101 in the first implementation, and a liquid storage tank 156 may also be connected between the second compressor 153 and the second reversing valve 154. Details are not described herein again.

The flow direction of the cooling medium in the third cooling medium loop is changed, to separately implement different functions of the second liquid heat exchanger 132 in the third cooling medium loop. The second liquid heat exchanger 132 may be used as a condenser for heating, and the second air heat exchanger 142 may correspondingly function as an evaporator. In addition, the second liquid heat exchanger 132 may be used as an evaporator to absorb heat to reduce a temperature, and the second air heat exchanger correspondingly functions as a condenser, to dissipate heat of or heat the energy storage system 200.

In order that the heat exchange assembly 100 is switched between different working modes, the heat exchange assembly 100 further includes a second valve assembly, and the second valve assembly is configured to separately control connection states between the third cooling medium loop and both of the first liquid heat exchanger 131 and the second liquid heat exchanger 132. Still refer to FIG. 9. The second valve assembly may include a fifth connection valve 175 and a sixth connection valve 176, the third cooling medium loop further includes a second intermediate connection pipe 122, the fifth connection valve 175 is connected between the fourth throttle 164 and the second air heat exchanger 142, the first terminal of the first liquid heat exchanger 131 is connected to the third throttle 163, the second terminal of the first liquid heat exchanger 131 is connected between the fifth connection valve 175 and the fourth throttle 164 by using the second intermediate connection pipe 122, and the sixth connection valve 176 is connected in the second intermediate connection pipe 122.

It can be understood that, the second valve assembly is disposed, to change a circulation path of the cooling medium in the third cooling medium loop, so that the third cooling medium loop may further absorb heat of the second cooling medium loop 102, and heat the first cooling medium loop 101 when exchanging heat with the first cooling medium loop 101 based on the heat, to improve energy utilization.

In addition, in order that the third cooling medium loop can dissipate heat of the second cooling medium loop 102, the second valve assembly may further include a seventh connection valve 177 and an eighth connection valve 178, the seventh connection valve 177 is connected between the second terminal of the first liquid heat exchanger 131 and the second heat pump assembly, and two terminals of the eighth connection valve 178 are respectively connected in parallel to two terminals of the third throttle 163, to form two parallel branches that can be selectively conducted/cut off.

The seventh connection valve 177 and the eighth connection valve 178 are disposed, to change the flow path of the cooling medium in the third cooling medium loop, so that when the working temperature of the charging system 300 is high, the cooling medium in the third cooling medium loop flows through the first liquid heat exchanger 131 to absorb heat of a first refrigerant loop, to cool and reduce a temperature of the charging system 300.

After the third cooling medium loop exchanges heat with the first cooling medium loop 101, the first cooling medium loop 101 needs to dissipate heat of or heat the energy storage system 200. The following describes a structure of the first cooling medium loop 101.

The first cooling medium loop 101 may include a second energy storage heat exchanger 112 and a third air heat exchanger 143, the second energy storage heat exchanger 112, the third air heat exchanger 143, and the first liquid heat exchange channel of the second liquid heat exchanger 132 are sequentially connected, and the second energy storage heat exchanger 112 is configured to exchange heat with the energy storage system 200; and the first cooling medium loop 101 further includes a first control valve 181, the first control valve 181 is connected between the third air heat exchanger 143 and the second liquid heat exchanger 132, a first interface and a second interface of the first control valve 181 are respectively connected to a first terminal of the third air heat exchanger 143 and the first terminal of the second liquid heat exchanger 132, and a third interface of the first control valve 181 is connected between a second terminal of the second liquid heat exchanger 132 and the second energy storage heat exchanger 112.

It can be understood that, when a working temperature of the energy storage system 200 is high and heat needs to be dissipated, the first cooling medium loop 101 may have two heat dissipation modes: air-liquid heat exchange and liquid-liquid heat exchange. The first control valve 181 may be used to select an unused cooling medium flowing loop, so that different heat dissipation modes or heat dissipation mode combinations are selected in different temperature states, to ensure that energy consumption is reduced when heat dissipation efficiency is enough.

In addition, in this implementation, the cooling medium in the first cooling medium loop 101 may be a secondary refrigerant, and a second liquid pump 192 may be connected in the first cooling medium loop 101, to drive the secondary refrigerant to flow. The second liquid pump 192 may be connected to any location of a main circulation loop in the first cooling medium loop 101, for example, may be connected between the second liquid heat exchanger 132 and the second energy storage heat exchanger 112.

The third cooling medium loop exchanges heat with the second cooling medium loop 102, and the second cooling medium loop 102 needs to exchange heat with the charging system 300. In this implementation, a specific structure and a working manner of the second cooling medium loop 102 may be similar to those in the first implementation. Details are not described herein again.

The following describes in detail specific circulation paths of different cooling medium loops in different working modes in this implementation.
1. The energy storage system 200 is heated separately.

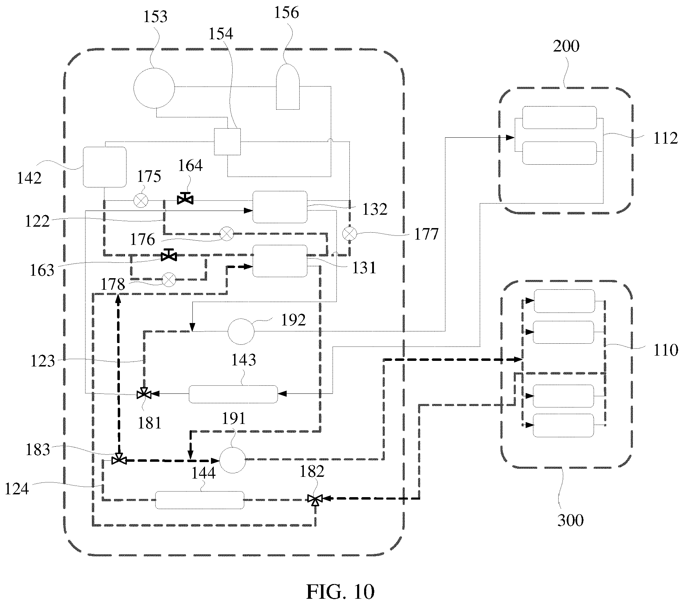

Refer to FIG. 10. In this case, the third cooling medium loop runs in a heat pump mode. A high-temperature and high-pressure refrigerant gas discharged by the second compressor 153 passes through the second reversing valve 154, enters the second liquid heat exchanger 132, and exchanges heat with the cooling medium in the first cooling medium loop 101 in the second liquid heat exchanger 132. A refrigerant heats the cooling medium in the second cooling medium loop 102 when releasing heat to be condensed into a liquid state, enters the second air heat exchanger 142 through the fourth throttle 164 and the fifth connection valve 175, absorbs heat of external air in the second air heat exchanger 142 to be evaporated into a gaseous state, and returns to the second compressor 153 through the second reversing valve 154 and the liquid storage tank 156, to complete circulation.

In addition, in the first cooling medium loop 101, the second liquid pump 192 runs. After being heated in the second liquid heat exchanger 132, the cooling medium passes through the second liquid pump 192 and enters the second energy storage heat exchanger 112. After being divided into a plurality of branches in the second energy storage heat exchanger 112, the cooling medium enters each coolant plate inside each battery pack of the energy storage system 200, to heat the battery. After being combined inside the energy storage system 200, the cooling medium flows through the third air heat exchanger 143. In this case, the third air heat exchanger 143 does not work and only functions as a flowing pipe. Then, the cooling medium passes through the first control valve 181 and returns to the second liquid heat exchanger 132, to complete circulation.

2. The energy storage system 200 is heated based on the working heat of the charging system 300, and the charging system 300 is not cooled separately.

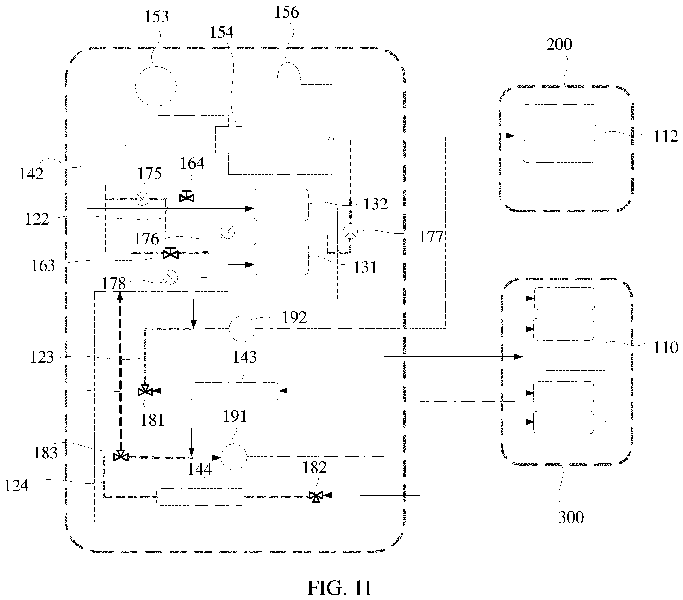

Refer to FIG. 11. The energy storage system 200 is heated based on residual heat of the charging system 300. In this case, the third cooling medium loop runs in a heat pump mode. A high-temperature and high-pressure refrigerant gas discharged by the second compressor 153 enters the second liquid heat exchanger 132 after a direction is reversed by the second reversing valve 154, and exchanges heat with the cooling medium in the first cooling medium loop 101 in the second liquid heat exchanger 132. A refrigerant heats the cooling medium in the first cooling medium loop 101 when releasing heat to be condensed into a liquid state, and enters the second intermediate connection pipe 122 through the fourth throttle 164. The sixth connection valve 176 is turned on. Subsequently, the refrigerant enters the first liquid heat exchanger 131, and absorbs heat of a high-temperature cooling medium in the second cooling medium loop 102 in the first liquid heat exchanger 131. After being evaporated into a gaseous state, the refrigerant sequentially passes through the eighth connection valve 178, the second air heat exchanger 142, the second reversing valve 154, and the liquid storage tank 156 and returns to the second compressor 153, to complete circulation.

In the first cooling medium loop 101, the second liquid pump 192 works, transfers a heated cooling medium in the second liquid heat exchanger 132 to the second energy storage heat exchanger 112, and heats a battery in each battery pack in the energy storage system 200.

In the second cooling medium loop 102, the first liquid pump 191 works, transfers, from the first interface and the second interface of the second control valve 182 to the first liquid heat exchanger 131, the cooling medium heated by the charging system 300, and transfers heat to a refrigerant of the third cooling medium loop in the first liquid heat exchanger 131.

3. The energy storage system 200 is heated based on the working heat of the charging system 300, and the charging system 300 is cooled separately.

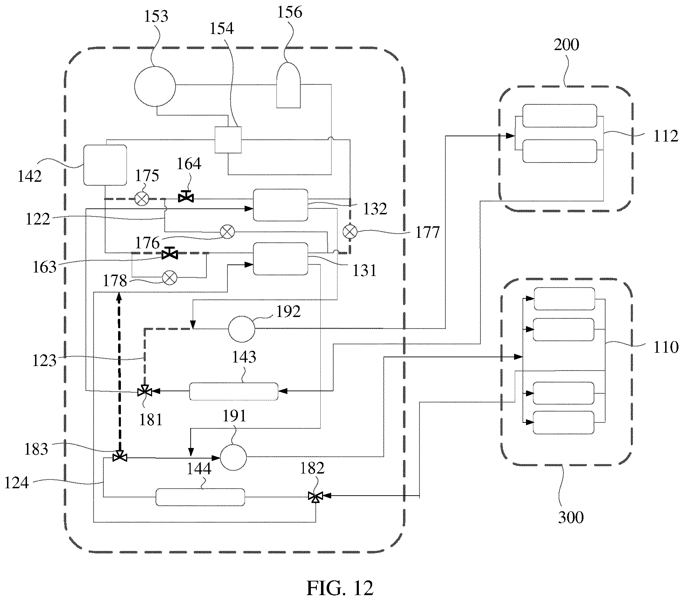

Refer to FIG. 12. In this case, the third cooling medium loop runs in a heat pump mode. A refrigerant circulation path in the third cooling medium loop and a cooling medium circulation path in the first cooling medium loop 101 are the same as those in the second mode. Details are not described herein again.

In the second cooling medium loop 102, the first liquid pump 191 works; transfers, from the first interface and the second interface of the second control valve 182 to the first liquid heat exchanger 131, a part of a coolant heated by the charging system 300, to provide heat for a refrigerant in the third cooling medium loop; transfers another part from the first interface and the third interface of the second control valve 182 to the fourth air heat exchanger 144, dissipates heat to the external air in the fourth air heat exchanger 144, passes through the fourth intermediate connection pipe 124, arrives at the third control valve 183, and returns to the first liquid pump 191 from the first interface and the second interface of the third control valve 183. In this mode, when heat emission power of the charging system 300 is high and exceeds heating power required by the energy storage system 200, some heat may be dissipated to an external environment.

4. The energy storage system 200 is cooled separately.

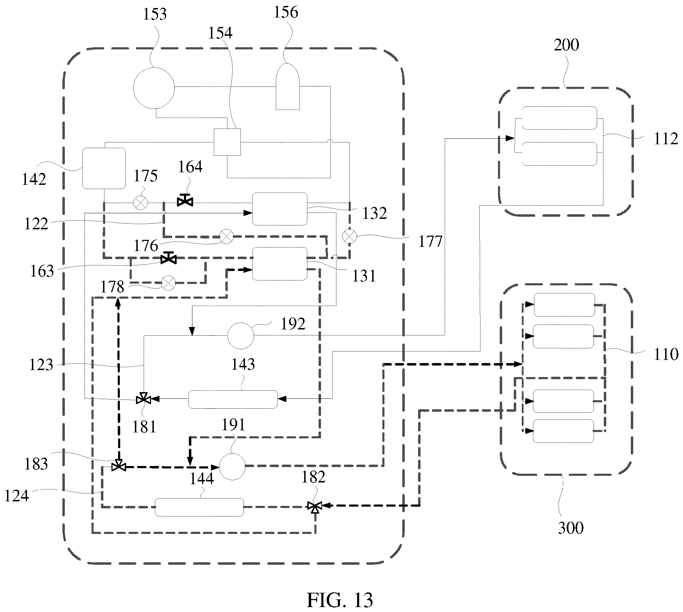

Refer to FIG. 13. In the first cooling medium loop 101, the second liquid pump 192 runs, the cooling medium enters the second energy storage heat exchanger 112 from the second liquid pump 192 to cool a battery inside each battery pack in the energy storage system 200, and then enters the third air heat exchanger 143 to dissipate heat to the external environment. In this case, if a temperature that is of the cooling medium and that is detected by a temperature detection unit in the system is not higher than a preset value, the first interface and the third interface of the first control valve 181 are connected, the cooling medium directly returns to the second liquid pump 192 through the third intermediate connection pipe 123, to complete cooling circulation; or if a temperature that is of the cooling liquid and that is detected by a temperature detection unit in the system is higher than a preset value, the first interface and the second interface of the first control valve 181 are connected, and the cooling medium enters the second liquid heat exchanger 132 through the first control valve 181, is further cooled by the refrigerant in the third cooling medium loop, and then returns to the second liquid pump 192, to complete cooling circulation.

In addition, the second compressor 153 in second cooling medium circulation is started, a high-temperature and high-pressure refrigerant gas from the second compressor 153 is adjusted by the second reversing valve 154, passes through the second air heat exchanger 142, exchanges heat with external air in the second air heat exchanger 142, is condensed into a liquid state, passes through the fifth connection valve 175 and the fourth throttle 164, enters the second liquid heat exchanger 132, absorbs heat of a high-temperature cooling medium in the first cooling medium loop 101 inside the second liquid heat exchanger 132, is evaporated into a gas when a temperature of the cooling medium in the first cooling medium loop 101 is reduced, and finally returns to the second compressor 153 through the second reversing valve 154 and the liquid storage tank 156, to complete circulation.

5. The charging system 300 is cooled separately.

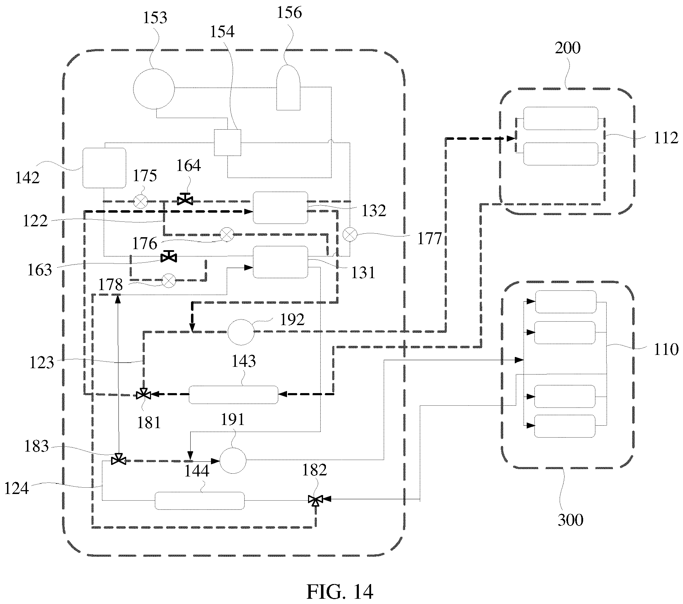

Refer to FIG. 14. In the second cooling medium loop 102, the first liquid pump 191 runs, the cooling medium enters the charging system 300 from the first liquid pump 191 to absorb heat generated when charging system 300 works, and enters the fourth air heat exchanger 144 through the first interface and the third interface of the second control valve 182 for heat dissipation and cooling. In this case, if a temperature that is of the cooling medium and that is detected by a temperature detection unit in the system is not higher than a preset value, the first interface and the second interface of the third control valve 183 are connected, and after passing through the fourth intermediate connection pipe 124, the cooling medium, namely, a coolant directly returns from the third control valve 183 to the first liquid pump 191, to complete cooling circulation; or if a temperature that is of the cooling medium and that is detected by a temperature detection unit in the system is higher than a preset value, the first interface and the third interface of the third control valve 183 are connected, the cooling medium passes through the third control valve 183, enters the first liquid heat exchanger, is further cooled by the refrigerant in the third cooling medium loop, and flows back to the first liquid pump 191, to complete cooling circulation.

If the temperature detection unit in the system detects that the cooling medium temperature is higher than the preset value and the second compressor 153 in the third cooling medium loop is started, the high-temperature and high-pressure refrigerant gas from the second compressor 153 is adjusted by the second reversing valve 154, passes through the second air heat exchanger 142, exchanges heat with external air inside the second air heat exchanger 142, is condensed into a liquid state, passes through the third throttle 163, enters the first liquid heat exchanger 131, absorbs heat of the high-temperature cooling medium in the second cooling medium loop 102 inside the first liquid heat exchanger 131, is evaporated into a gas when a temperature of the cooling medium is reduced, and finally returns to the second compressor 153 through the second reversing valve 154 and the liquid storage tank 156, to complete circulation.

6. The energy storage system 200 and the charging system 300 are cooled simultaneously.

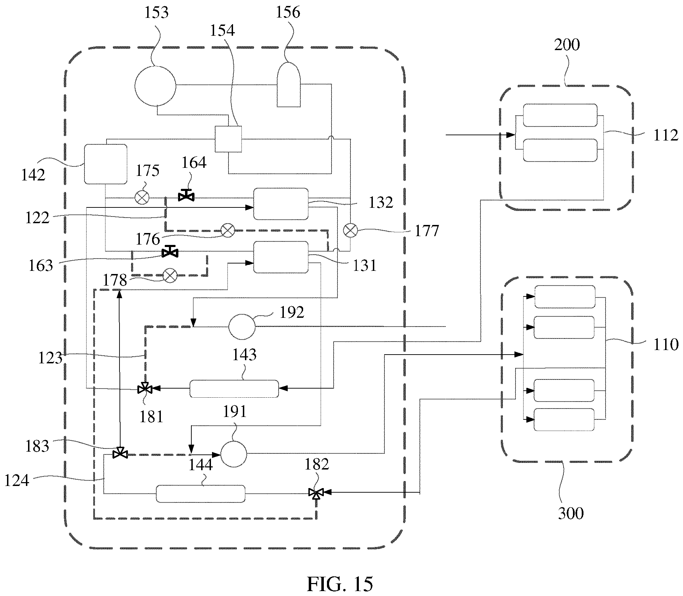

Refer to FIG. 15. In this case, the heat exchange assembly 100 only needs to simultaneously enter the working mode 5 and the working mode 6. Details are not described herein again.

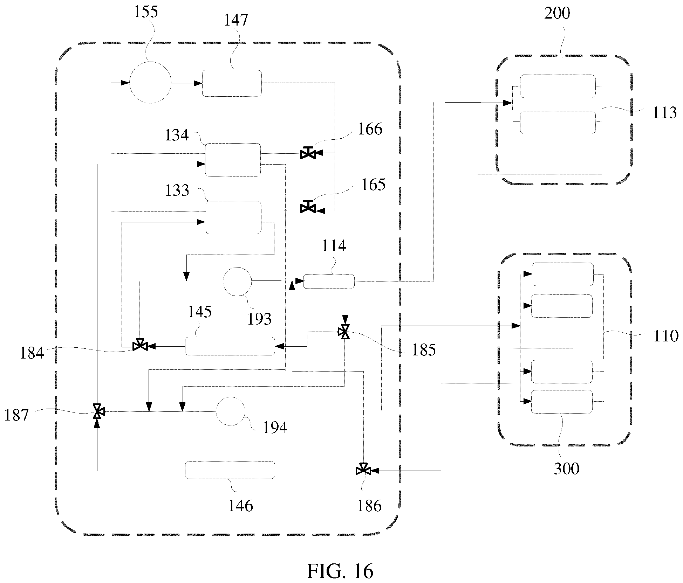

Refer to FIG. 16. Different from the foregoing two implementations, in a third possible implementation, a heat exchange process between the first cooling medium loop 101 and the second cooling medium loop 102 does not need to be indirectly performed through another cooling medium loop or a liquid heat exchanger. Instead, the first cooling medium loop 101 and the second cooling medium loop 102 may selectively and directly communicate, so that the working heat of the charging system 300 is used to heat the energy storage system 200 in a direct heat exchange manner.

The heat exchange assembly 100 may further include a third valve assembly, the third valve assembly is disposed in the cooling medium loop, and the third valve assembly is configured to control the first cooling medium loop 101 and the second cooling medium loop 102 to be disconnected from each other or communicate with each other; and when the first cooling medium loop 101 and the second cooling medium loop 102 are connected to each other, the cooling medium flow in the second cooling medium loop 102 directly flows through the first cooling medium loop 101, to exchange heat with the energy storage system 200.

It can be understood that, the third valve assembly is disposed, so that the first cooling medium loop 101 and the second cooling medium loop 102 can be independent of each other or the first cooling medium loop 101 and the second cooling medium loop 102 can form an entire cooling medium circulation loop. In a thermal management process, based on an ambient temperature or a heat emission state, independent temperature control of the energy storage system 200 and the charging system 300 may be implemented, or the energy storage system 200 and the charging system 300 may exchange heat, to reduce energy consumption and improve energy utilization.

In working environments with different temperatures, in addition to a case in which the first cooling medium loop 101 and the second cooling medium exchange heat, the first cooling medium loop 101 and the second cooling medium loop 102 need to exchange heat with the external environment, so that independent heating or heat dissipation of the energy storage system 200 and independent heat dissipation of the charging system 300 can be implemented in addition to a case in which the energy storage system 200 is heated based on the working heat of the charging system 300.

Therefore, to meet a requirement for different working modes, the cooling medium loop in the heat exchange assembly 100 may further include a fourth cooling medium loop, a third liquid heat exchanger 133 and a fourth liquid heat exchanger 134 may be disposed in the heat exchange assembly 100, a first liquid heat exchange channel of the third liquid heat exchanger 133 is connected in the first cooling medium loop 101, a first liquid heat exchange channel of the fourth liquid heat exchanger 134 is connected in the second cooling medium loop 102, and a second liquid heat exchange channel of the third liquid heat exchanger 133 and a second liquid heat exchange channel of the fourth liquid heat exchanger 134 are connected in parallel in the fourth cooling medium loop; and the third liquid heat exchanger 133 is configured to enable the fourth cooling medium loop and the first cooling medium loop 101 to exchange heat, and the fourth liquid heat exchanger 134 is configured to enable the fourth cooling medium loop and the second cooling medium loop 102 to exchange heat.

It can be understood that, the fourth cooling medium loop is disposed, to implement independent thermal management and temperature control of a first refrigerant loop and a second refrigerant loop, to adapt to a requirement for different working modes at different ambient temperatures, and ensure that the energy storage system 200 and the charging system 300 can have a proper working temperature.

The following first describes a structure of the first cooling medium loop 101 in this implementation.

Still refer to FIG. 16. The first cooling medium loop 101 may include a third energy storage heat exchanger 113 and a fifth air heat exchanger 145, the third energy storage heat exchanger 113 is configured to exchange heat with the energy storage system 200, and the third energy storage heat exchanger 113, the fifth air heat exchanger 145, and a first liquid heat exchange channel of the third liquid heat exchanger 133 are sequentially connected; and the third valve assembly includes a fourth control valve 184, the fourth control valve 184 is connected between the fifth air heat exchanger 145 and the first liquid heat exchange channel of the third liquid heat exchanger 133, a first interface of the fourth control valve 184 is connected to the fifth air heat exchanger 145, and a second interface and a third interface of the fourth control valve 184 are respectively connected to two opposite terminals of the first liquid heat exchange channel of the third liquid heat exchanger 133.

Based on two branches formed between the fifth air heat exchanger 145 and the third energy storage heat exchanger 113 by using the fourth control valve 184, the first cooling medium loop 101 may have two heat dissipation modes: air-liquid heat exchange and liquid-liquid heat exchange. The fourth control valve 184 may be used to select an unused cooling medium flowing loop, so that different heat dissipation modes or heat dissipation mode combinations are selected in different temperature states, to ensure that energy consumption is reduced when heat dissipation efficiency is enough.

The heat exchange assembly 100 may further include an electric heating unit 114, to implement a function that the first cooling medium loop 101 can separately heat the energy storage system 200. The electric heating unit 114 is disposed in the first cooling medium loop 101, and is configured to heat the cooling medium in the first cooling medium loop 101, to convert electric energy into heat energy. Therefore, when heat provided when the charging system 300 works is insufficient to maintain a working temperature of the energy storage system 200, the temperature of the cooling medium may be further increased through electric heating, to maintain the working temperature of the energy storage system 200 within a proper range.

It should be noted that, the electric heating unit 114 may be connected to any location in the first cooling medium loop 101, provided that the electric heating unit 114 can heat a circulated cooling medium. For example, the electric heating unit 114 may be connected between the fifth air heat exchanger 145 and the third energy storage heat exchanger 113, and is connected in the second cooling medium loop 102 in the first cooling medium loop 101. The cooling medium in the second cooling medium loop 102 may enter the electric heating unit 114 from an inlet side of the electric heating unit 114. Therefore, it may be determined whether the temperature of the cooling medium heated by the charging system 300 is sufficient to heat the energy storage system 200. Then, the cooling medium flows into the electric heating unit 114. A cooling medium flowing out of the electric heating unit 114 may flow through the third energy storage heat exchanger 113 and exchange heat with the energy storage system 200. For example, the electric heating unit 114 may be a water ceramic heater. When the electric heating unit 114 does not work, the electric heating unit 114 only functions as a flowing pipe.

The following describes a communication manner between the first cooling medium loop 101 and the second cooling medium loop 102 and a structure of the second cooling medium loop 102 in this implementation.

Still refer to FIG. 16. The third valve assembly may further include a fifth control valve 185 and a sixth control valve 186, a first interface and a second interface of the fifth control valve 185 are connected in the second cooling medium loop 102, and a third interface of the fifth control valve 185 is connected in the first cooling medium loop 101; and a first interface and a second interface of the sixth control valve 186 are connected in the first cooling medium loop 101, and a third interface of the sixth control valve 186 is connected to the second cooling medium loop 102.

The fifth control valve 185 and the sixth control valve 186 are disposed, so that the first cooling medium loop 101 and the second cooling medium loop 102 can be accurately and efficiently switched between a connected state and a disconnected state, to implement different working modes at different ambient temperatures.

In addition, the second cooling medium loop 102 may further include a sixth air heat exchanger 146; and the third valve assembly further includes a seventh control valve 187, a first interface of the seventh control valve 187 and a first interface of the sixth control valve 186 are respectively connected to two opposite terminals of the sixth air heat exchanger 146, a third interface of the seventh control valve 187 and a third interface of the sixth control valve 186 are respectively connected to two terminals of the first liquid heat exchange channel of the fourth liquid heat exchanger 134, and a second interface of the seventh control valve 187 and a second interface of the sixth control valve 186 are respectively connected to two opposite terminals of the charger heat exchanger 110.

It can be understood that, when the working temperature of the charging system 300 is high and heat needs to be dissipated, the second cooling medium loop 102 may have two heat dissipation modes: air-liquid heat exchange and liquid-liquid heat exchange. The sixth control valve 186 and the seventh control valve 187 may be used to select an unused cooling medium flowing loop, so that different heat dissipation modes or heat dissipation mode combinations are selected in different temperature states, to ensure that energy consumption is reduced when heat dissipation efficiency is enough.

It should be noted that, a third liquid pump 193 may be disposed in the first cooling medium loop 101, and is configured to drive the cooling medium in the first cooling medium loop 101 to flow, and a fourth liquid pump 194 may be disposed in the second cooling medium loop 102, and is configured to drive the cooling medium in the second cooling medium loop 102 to flow. In addition, when the first cooling medium loop 101 and the second cooling medium loop 102 communicate to form complete circulation, the fourth liquid pump 194 may be used as a power source for driving.

The following describes a specific structure of the fourth cooling medium loop in this implementation.

Still refer to FIG. 16. The fourth cooling medium loop may include a third compressor 155, a seventh air heat exchanger 147, a fifth throttle 165, and a sixth throttle 166; and an outlet of the third compressor 155 is connected to an inlet of the seventh air heat exchanger 147, the third liquid heat exchanger 133 and the fourth liquid heat exchanger 134 are connected in parallel between an inlet of the third compressor 155 and an outlet of the seventh air heat exchanger 147, the fifth throttle 165 is connected between the third liquid heat exchanger 133 and the outlet of the seventh air heat exchanger 147, and the sixth throttle 166 is connected between the fourth liquid heat exchanger 134 and the outlet of the seventh air heat exchanger 147.

It can be understood that, the seventh air heat exchanger 147 may be used as a condenser, so that the third liquid heat exchanger 133 and the fourth liquid heat exchanger 134 form parallel branches in the fourth cooling medium loop. The third liquid heat exchanger 133 and the fourth liquid heat exchanger 134 each may function as an evaporator, to separately perform thermal management on the first cooling medium loop 101 and the second cooling medium loop 102 that correspond to the third liquid heat exchanger 133 and the fourth liquid heat exchanger 134.

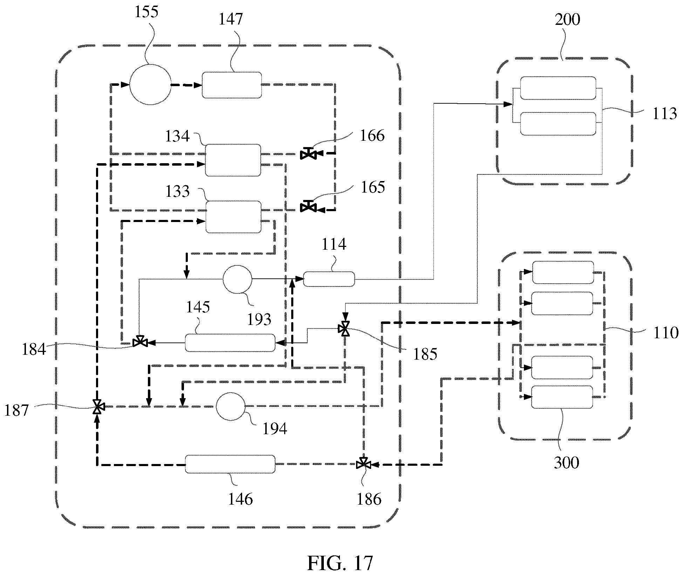

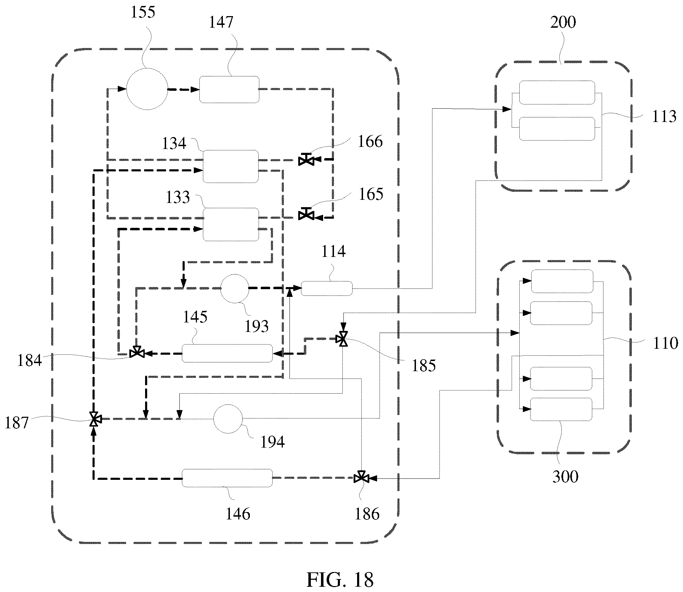

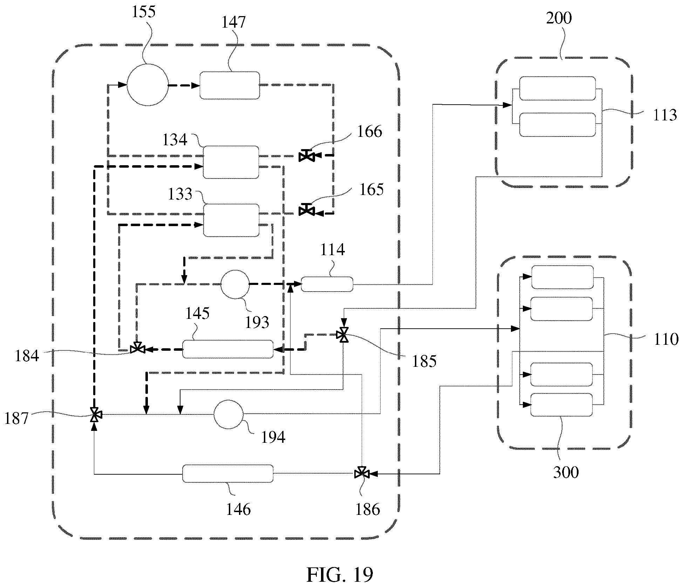

The following describes in detail specific circulation paths of different cooling medium loops in different working modes in this implementation.
1. The energy storage system 200 is heated separately.
   Refer to FIG. 17. In the first cooling medium loop 101, the third liquid pump 193 runs, and the cooling medium enters the electric heating unit 114 through the third liquid pump 193, enters the third energy storage heat exchanger 113 after being heated in the electric heating unit 114, and heats a battery in each battery pack in the energy storage system 200 in the third energy storage heat exchanger 113. In this case, the first interface and the second interface of the fifth control valve 185 are connected, and the first interface and the third interface of the fourth control valve 184 are connected. A coolant sequentially passes through the fifth control valve 185, the fifth air heat exchanger 145, and the fourth control valve 184 and returns to the third liquid pump 193. In this case, the fifth air heat exchanger 145 does not work, to prevent heat of the cooling medium from being dissipated to an environment.
2. The energy storage system 200 is heated based on the working heat of the charging system 300, and the charging system 300 is not cooled separately.
   Refer to FIG. 18. In this case, the second cooling medium loop 102 communicates with the first cooling medium loop 101, the fourth liquid pump 194 runs, and the cooling medium enters the charger heat exchanger 110 through the fourth liquid pump 194, absorbs heat of the charging system 300 to increase a temperature, and enters the electric heating unit 114 through the first interface and the third interface of the sixth control valve 186. A cooling medium temperature collection apparatus is disposed in the electric heating unit 114. If a cooling medium entering the electric heating unit 114 does not reach a specified temperature threshold, the electric heating unit 114 is started to perform additional heating, or if the cooling medium reaches the specified temperature threshold, the electric heating unit 114 does not work. The cooling medium flows out of the electric heating unit 114, enters the third energy storage heat exchanger 113, and heats a battery in each battery pack of the energy storage system 200 in the third energy storage heat exchanger 113. Finally, the cooling medium passes through the first interface and the third interface of the fifth control valve 185, and then flows back to the fourth liquid pump 194, to complete circulation.
3. The energy storage system 200 is heated based on the working heat of the charging system 300, and the charging system 300 is cooled separately.
   Refer to FIG. 19. In this case, the second cooling medium loop 102 communicates with the first cooling medium loop 101, the fourth liquid pump 194 runs, and the cooling medium passes through the fourth liquid pump 194, enters the charger heat exchanger 110, and absorbs heat of the charging system 300 to increase the temperature. The first interface, the second interface, and the third interface of the sixth control valve 186 are all turned on; a part of the cooling medium flows out through the first interface and the third interface of the sixth control valve 186, passes through the electric heating unit 114, enters the third energy storage heat exchanger 113, heats a battery in each battery pack of the energy storage system 200 in the third energy storage heat exchanger 113, flows out through the third interface of the fifth control valve 185, and flows back to the fourth liquid pump 194; and the other part of the cooling medium flows out through the first interface and the second interface of the sixth control valve 186, flows out through the first interface and the second interface of the seventh control valve 187 after being cooled by the sixth air heat exchanger 146, and returns to the fourth liquid pump 194 after being combined with a cooling medium flowing out through the third interface of the fifth control valve 185.
4. The energy storage system 200 is cooled separately.

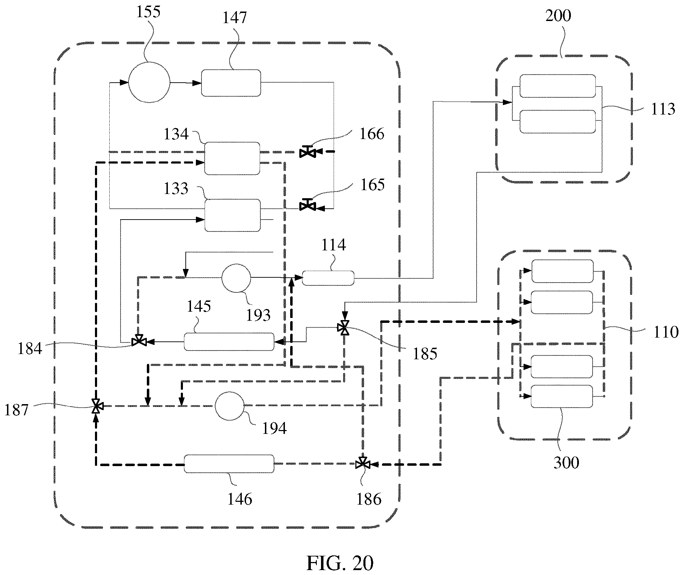

Refer to FIG. 20. In the first cooling medium loop 101, the third liquid pump 193 is started, and the cooling medium enters the electric heating unit 114 from the third liquid pump 193. In this case, the electric heating unit 114 does not work, and the cooling medium enters the third energy storage heat exchanger 113 to absorb working heat of the battery in the battery pack in the energy storage system 200. Then, a high-temperature cooling medium flows out of the third energy storage heat exchanger 113, enters the fifth air heat exchanger 145 through the first interface and the second interface of the fifth control valve 185, and exchanges heat with external air in the fifth air heat exchanger 145 for heat dissipation. A cooling medium temperature detection unit is installed in the system, and the temperature detection unit may be placed at a location such as an outlet of the fifth air heat exchanger 145 or an inlet of the third energy storage heat exchanger 113. If it is detected that a temperature that is of the cooling medium and that exists after the fifth air heat exchanger 145 dissipates heat is not higher than a preset temperature threshold, the first interface and the third interface of the fourth control valve 184 are connected, and the cooling medium directly flows back to the third liquid pump 193 through the fourth control valve 184; or if it is detected that a temperature that is of the cooling medium and that exists after the fifth air heat exchanger 145 dissipates heat is higher than a preset temperature threshold, the first interface and the second interface of the fourth control valve 184 are connected, and a coolant first enters the third liquid heat exchanger 133 through the fourth control valve 184, exchanges heat with a refrigerant in the fourth cooling medium loop, and returns to the third liquid pump 193 after a temperature is reduced for a second time.

If it is detected that the temperature that is of the cooling medium and that exists after the fifth air heat exchanger 145 dissipates heat is higher than the preset temperature threshold, the third compressor 155 is started in the fourth cooling medium loop, a high-temperature and high-pressure refrigerant gas flowing out of the third compressor 155 enters the seventh air heat exchanger 147 to be condensed into a high-temperature and high-pressure refrigerant liquid, becomes a low-temperature and low-pressure gas-liquid mixture after being throttled by the fifth throttle 165, enters the third liquid heat exchanger 133, exchanges heat with the cooling medium in the first cooling medium loop 101 in the third liquid heat exchanger 133, absorbs heat of the cooling medium, and returns to the third compressor 155.

5. The charging system 300 is cooled separately.

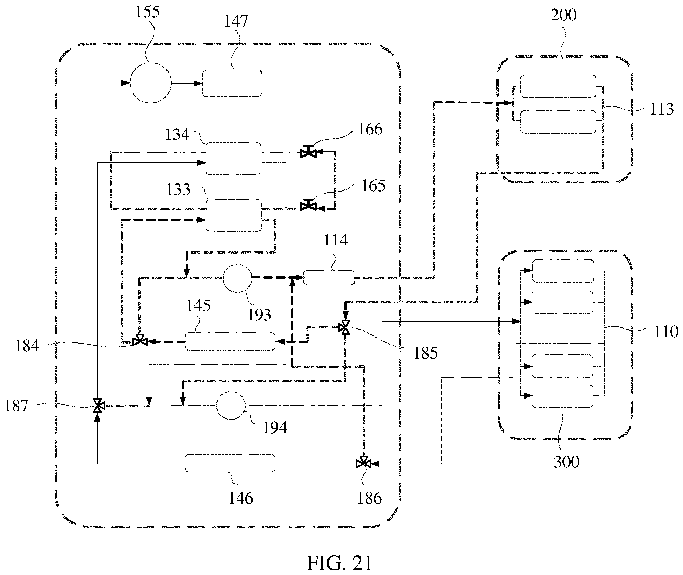

Refer to FIG. 21. In the second cooling medium loop 102, the fourth liquid pump 194 is started, the cooling medium enters the charger heat exchanger 110 from the fourth liquid pump 194, takes away heat generated when the charging system 300 works, enters the sixth air heat exchanger 146 through the first interface and the second interface of the sixth control valve 186, and exchanges heat with external air in the sixth air heat exchanger 146, to dissipate heat to the surrounding environment. A temperature detection unit may also be installed in the second cooling medium loop 102, and an installation location may be an outlet of the sixth air heat exchanger 146, an inlet of the charger heat exchanger 110, or the like. In this case, if it is detected that the temperature of the cooling medium is less than or equal to a specified value, the first interface and the third interface of the seventh control valve 187 are connected, and the cooling medium directly returns to the fourth liquid pump 194, to complete cooling circulation; or if the temperature of the cooling medium is higher than a specified value, the first interface and the second interface of the seventh control valve 187 are connected, and the cooling medium enters the fourth liquid heat exchanger 134. After exchanging heat with a refrigerant in the fourth cooling medium loop, the cooling medium returns to the fourth liquid pump 194 after a temperature is reduced for a second time.

If the temperature of the cooling medium is higher than the preset value, the third compressor 155 is started in the fourth cooling medium loop, a high-temperature and high-pressure refrigerant gas flowing out of the third compressor 155 enters the seventh air heat exchanger 147 to be condensed into a high-temperature and high-pressure refrigerant liquid, becomes a low-temperature and low-pressure gas-liquid mixture after being throttled by the sixth throttle 166, enters the fourth liquid heat exchanger 134, exchanges heat with the cooling medium in the second cooling medium loop 102 in the fourth liquid heat exchanger 134, absorbs heat of the cooling medium, and returns to the third compressor 155.

6. The energy storage system 200 and the charging system 300 are cooled simultaneously.

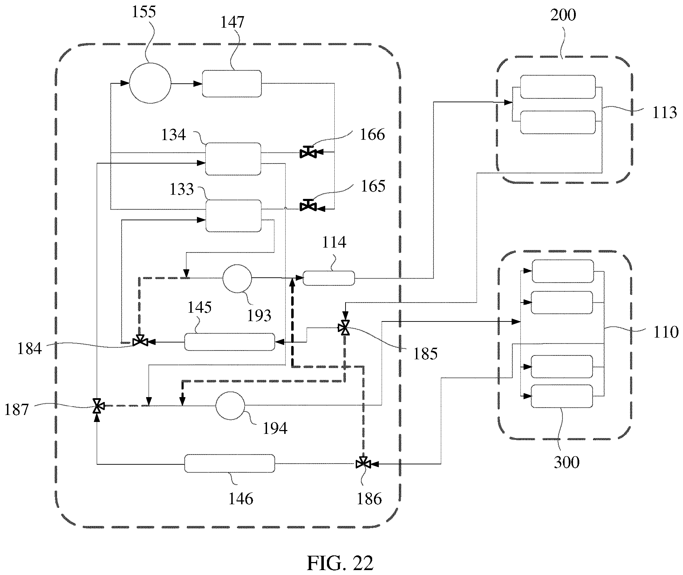

Refer to FIG. 22. In this case, the heat exchange assembly 100 only needs to simultaneously enter the working mode 5 and the working mode 6. Details are not described herein again.

It should be noted that, in different specific implementations of this embodiment of this application, a component connection location in the cooling medium loop of the heat exchange assembly 100 represents only an example arrangement solution. In the idea of the technical solution of this application, a component location and a connection sequence in the cooling medium loop are adjusted without changing a function and an effect implemented by the component, and this should be considered to be equivalent to the technical solution of this embodiment of this application.

In the energy storage and charging station in this embodiment of this application, heat of the energy storage system and heat of the charging system are managed in a centralized manner, so that the energy storage system and the charging system can exchange heat by using the heat exchange assembly. The cooling medium in the cooling medium loop separately flows through the charging system and the energy storage system, and the charging system and the energy storage system each exchange heat with the cooling medium loop. Heat generated when the charging system works is transferred, through the cooling medium loop, to the energy storage system for use, to reduce energy consumption required to heat the energy storage system to maintain a temperature, and improve energy use efficiency.

The terms "first", "second", "third", "fourth", and the like (if exist) in this specification of embodiments of this application are intended to distinguish between similar objects but do not necessarily indicate a specific order or sequence.

In addition, terms such as "include", "have", and any variations thereof are intended to cover non-exclusive inclusions, for example, a process, method, system, product, or device that includes a series of steps or units, which are not necessarily limited to those clearly listed steps or units, but may include other steps or units that are not clearly listed or inherent to such a process, method, product, or device.

Finally, it should be noted that the foregoing embodiments are merely intended for describing the technical solutions of embodiments of this application other than limiting embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. An energy storage and charging station, comprising a heat exchange assembly, an energy storage system configured to store electric energy, and a charging system configured to charge an electric component, wherein the energy storage system is electrically connected to the charging system; and
the heat exchange assembly comprises a cooling medium loop, a cooling medium in the cooling medium loop separately flows through the charging system and the energy storage system, and the charging system and the energy storage system each exchange heat with the cooling medium loop, to transfer, to the energy storage system through the cooling medium loop, heat generated when the charging system works.

2. The energy storage and charging station according to claim 1, wherein the heat exchange assembly comprises at least two cooling medium loops, the at least two cooling medium loops comprise a first cooling medium loop and a second cooling medium loop, the first cooling medium loop is configured to exchange heat with the energy storage system, and the second cooling medium loop is configured to cool the charging system; and
the first cooling medium loop and the second cooling medium loop may communicate or exchange heat, so that a cooling medium in the second cooling medium loop exchanges heat with the energy storage system.

3. The energy storage and charging station according to claim 2, wherein the heat exchange assembly further comprises a charger heat exchanger, and the charger heat exchanger is connected in the second cooling medium loop and is configured to exchange heat with the charging system.

4. The energy storage and charging station according to claim 3, wherein the heat exchange assembly further comprises at least one liquid heat exchanger, the liquid heat exchanger is configured to perform heat exchange between different cooling medium loops, the liquid heat exchanger comprises a first liquid heat exchange channel and a second liquid heat exchange channel, and a first liquid heat exchange channel and a second liquid heat exchange channel of a same liquid heat exchanger exchange heat.

5. The energy storage and charging station according to claim 4, wherein the at least one liquid heat exchanger comprises a first liquid heat exchanger, the second cooling medium loop is connected to a first liquid heat exchange channel of the first liquid heat exchanger, and a second liquid heat exchange channel of the first liquid heat exchanger communicates with the first cooling medium loop or exchanges heat with the first cooling medium loop.

6. The energy storage and charging station according to claim 5, wherein the heat exchange assembly further comprises a first energy storage heat exchanger, and the first energy storage heat exchanger is connected in the first cooling medium loop and is configured to exchange heat with the energy storage system through a phase transition of the cooling medium.

7. The energy storage and charging station according to claim 6, wherein the first cooling medium loop further comprises a first heat pump assembly, a first air heat exchanger, and a first throttle;
a first terminal of the first liquid heat exchanger is connected to the first air heat exchanger, and a second terminal of the first liquid heat exchanger is connected between the first heat pump assembly and the first energy storage heat exchanger;
the heat exchange assembly further comprises a first valve assembly, and the first valve assembly is configured to control a connection state of the first liquid heat exchanger in the first cooling medium loop; and
the first heat pump assembly comprises a first compressor and a first reversing valve, the first compressor and the first reversing valve each are connected in the first cooling medium loop, the first compressor is configured to drive a cooling medium in the first cooling medium loop to flow, and the first reversing valve is configured to change a flow direction of the cooling medium in the first cooling medium loop.

8. The energy storage and charging station according to claim 7, wherein the first valve assembly comprises a first connection valve and a second connection valve, the first cooling medium loop further comprises a first intermediate connection pipe, the first connection valve is connected between the first air heat exchanger and the first throttle, the first terminal of the first liquid heat exchanger is connected between the first connection valve and the first air heat exchanger, the second terminal of the first liquid heat exchanger is connected between the first connection valve and the first throttle by using the first intermediate connection pipe, and the second connection valve is connected in the first intermediate connection pipe.

9. The energy storage and charging station according to claim 8, wherein the first valve assembly further comprises a third connection valve and a fourth connection valve, the second terminal of the first liquid heat exchanger is connected between the first heat pump assembly and the first energy storage heat exchanger by using the third connection valve, the first cooling medium loop further comprises a second throttle, and the fourth connection valve and the second throttle are connected in parallel between a first terminal of the first air heat exchanger and the first terminal of the first liquid heat exchanger.

10. The energy storage and charging station according to claim 5, wherein the at least two cooling medium loops further comprise a third cooling medium loop;
the liquid heat exchanger further comprises a second liquid heat exchanger, a first liquid heat exchange channel of the second liquid heat exchanger is connected in the first cooling medium loop, a second liquid heat exchange channel of the second liquid heat exchanger is controllably connected in the third cooling medium loop, and the second liquid heat exchange channel of the first liquid heat exchanger is controllably connected in the third cooling medium loop; and
when both the second liquid heat exchange channel of the second liquid heat exchanger and the second liquid heat exchange channel of the first liquid heat exchanger are in a connected state, the third cooling medium loop performs heat exchange between the first cooling medium loop and the second cooling medium loop.

11. The energy storage and charging station according to claim 10, wherein the third cooling medium loop comprises a second heat pump assembly, a second air heat exchanger, a third throttle, and a fourth throttle;
the third throttle is connected between a first terminal of the first liquid heat exchanger and the second air heat exchanger, a second terminal of the first liquid heat exchanger is connected to the heat pump assembly, the fourth throttle is connected between a first terminal of the second liquid heat exchanger and the second air heat exchanger, and a second terminal of the second liquid heat exchanger is connected to the second heat pump assembly; and
the second heat pump assembly comprises a second compressor and a second reversing valve, the second compressor and the second reversing valve are both connected in the third cooling medium loop, the second compressor is configured to drive a cooling medium in the third cooling medium loop to flow, and the second reversing valve is configured to change a flow direction of the cooling medium in the third cooling medium loop.

12. The energy storage and charging station according to claim 11, wherein the heat exchange assembly further comprises a second valve assembly, and the second valve assembly is configured to separately control connection states between the third cooling medium loop and both of the first liquid heat exchanger and the second liquid heat exchanger; and
the second valve assembly comprises a fifth connection valve and a sixth connection valve, the third cooling medium loop further comprises a second intermediate connection pipe, the fifth connection valve is connected between the fourth throttle and the second air heat exchanger, the first terminal of the first liquid heat exchanger is connected to the third throttle, the second terminal of the first liquid heat exchanger is connected between the fifth connection valve and the fourth throttle by using the second intermediate connection pipe, and the sixth connection valve is connected in the second intermediate connection pipe.

13. The energy storage and charging station according to claim 12, wherein the second valve assembly further comprises a seventh connection valve and an eighth connection valve, the seventh connection valve is connected between the second terminal of the first liquid heat exchanger and the second heat pump assembly, and two terminals of the eighth connection valve are respectively connected in parallel to two terminals of the third throttle.

14. The energy storage and charging station according to any one of claims 10 to 13, wherein the first cooling medium loop comprises a second energy storage heat exchanger and a third air heat exchanger, the second energy storage heat exchanger, the third air heat exchanger, and the first liquid heat exchange channel of the second liquid heat exchanger are sequentially connected, and the second energy storage heat exchanger is configured to exchange heat with the energy storage system; and
the first cooling medium loop further comprises a first control valve, the first control valve is connected between the third air heat exchanger and the second liquid heat exchanger, a first interface and a second interface of the first control valve are respectively connected to a first terminal of the third air heat exchanger and the first terminal of the second liquid heat exchanger, and a third interface of the first control valve is connected between a second terminal of the second liquid heat exchanger and the second energy storage heat exchanger.

15. The energy storage and charging station according to any one of claims 4 to 13, wherein the second cooling medium loop further comprises a fourth air heat exchanger and a second control valve, the second control valve is connected between the charger heat exchanger and the first liquid heat exchanger, and a first interface and a second interface of the second control valve are respectively connected to one terminal of the charger heat exchanger and one terminal of the first liquid heat exchanger; and
a first terminal of the fourth air heat exchanger is connected to a third interface of the second control valve, and a second terminal of the fourth air heat exchanger is connected to the other terminal of the first liquid heat exchanger.

16. The energy storage and charging station according to claim 15, wherein the second cooling medium loop further comprises a third control valve, a first interface and a second interface of the third control valve are respectively connected to the fourth air heat exchanger and the charger heat exchanger, and a third interface of the third control valve is connected between the second control valve and the first liquid heat exchanger.

17. The energy storage and charging station according to claim 4, wherein the heat exchange assembly further comprises a third valve assembly, the third valve assembly is disposed in the cooling medium loop, and the third valve assembly is configured to control the first cooling medium loop and the second cooling medium loop to be disconnected from each other or communicate with each other; and
when the first cooling medium loop and the second cooling medium loop communicate with each other, the cooling medium flow in the second cooling medium loop flows through the first cooling medium loop, to exchange heat with the energy storage system.

18. The energy storage and charging station according to claim 17, wherein the at least two cooling medium loops further comprise a fourth cooling medium loop, the at least one liquid heat exchanger comprises a third liquid heat exchanger and a fourth liquid heat exchanger, a first liquid heat exchange channel of the third liquid heat exchanger is connected in the first cooling medium loop, a first liquid heat exchange channel of the fourth liquid heat exchanger is connected in the second cooling medium loop, and a second liquid heat exchange channel of the third liquid heat exchanger and a second liquid heat exchange channel of the fourth liquid heat exchanger are connected in parallel in the fourth cooling medium loop; and
the third liquid heat exchanger is configured to enable the fourth cooling medium loop and the first cooling medium loop to exchange heat, and the fourth liquid heat exchanger is configured to enable the fourth cooling medium loop and the second cooling medium loop to exchange heat.

19. The energy storage and charging station according to claim 18, wherein the first cooling medium loop comprises a third energy storage heat exchanger and a fifth air heat exchanger, the third energy storage heat exchanger is configured to exchange heat with the energy storage system, and the third energy storage heat exchanger, the fifth air heat exchanger, and a first liquid heat exchange channel of the third liquid heat exchanger are sequentially connected; and
the third valve assembly comprises a fourth control valve, the fourth control valve is connected between the fifth air heat exchanger and the first liquid heat exchange channel of the third liquid heat exchanger, a first interface of the fourth control valve is connected to the fifth air heat exchanger, and a second interface and a third interface of the fourth control valve are respectively connected to two opposite terminals of the first liquid heat exchange channel of the third liquid heat exchanger.

20. The energy storage and charging station according to claim 19, wherein the heat exchange assembly further comprises an electric heating unit, the electric heating unit is disposed in the first cooling medium loop, the electric heating unit is configured to heat the cooling medium in the first cooling medium loop, and the electric heating unit is connected between the fifth air heat exchanger and the third energy storage heat exchanger.

21. The energy storage and charging station according to claim 20, wherein
the third valve assembly further comprises a fifth control valve and a sixth control valve, a first interface and a second interface of the fifth control valve are connected in the second cooling medium loop, and a third interface of the fifth control valve is connected in the first cooling medium loop; and
a first interface and a second interface of the sixth control valve are connected in the first cooling medium loop, and a third interface of the sixth control valve is connected in the second cooling medium loop.

22. The energy storage and charging station according to claim 21, wherein the second cooling medium loop further comprises a sixth air heat exchanger; and
the third valve assembly further comprises a seventh control valve, a first interface of the seventh control valve and a first interface of the sixth control valve are respectively connected to two opposite terminals of the sixth air heat exchanger, a third interface of the seventh control valve and a third interface of the sixth control valve are respectively connected to two terminals of the first liquid heat exchange channel of the fourth liquid heat exchanger, and a second interface of the seventh control valve and a second interface of the sixth control valve are respectively connected to two opposite terminals of the charger heat exchanger.

23. The energy storage and charging station according to any one of claims 18 to 22, wherein the fourth cooling medium loop comprises a third compressor, a seventh air heat exchanger, a fifth throttle, and a sixth throttle; and
an outlet of the third compressor is connected to an inlet of the seventh air heat exchanger, the third liquid heat exchanger and the fourth liquid heat exchanger are connected in parallel between an inlet of the third compressor and an outlet of the seventh air heat exchanger, the fifth throttle is connected between the third liquid heat exchanger and the outlet of the seventh air heat exchanger, and the sixth throttle is connected between the fourth liquid heat exchanger and the outlet of the seventh air heat exchanger.
